(19) Europäisches Patentamt
European Patent Office
Office européen des brevets

(11) **EP 4 336 490 B1**

(12) **EUROPEAN PATENT SPECIFICATION**

(45) Date of publication and mention
of the grant of the patent:
**22.10.2025 Bulletin 2025/43**

(21) Application number: **22815107.2**

(22) Date of filing: **25.05.2022**

(51) International Patent Classification (IPC):
**G10L 13/033** *(2013.01)*   **G10L 13/10** *(2013.01)*
**G10L 25/48** *(2013.01)*   **G10L 25/30** *(2013.01)*
**G10L 15/04** *(2013.01)*   **G10L 21/007** *(2013.01)*

(52) Cooperative Patent Classification (CPC):
**G10L 13/10;** G10L 15/04; G10L 21/007

(86) International application number:
**PCT/CN2022/094838**

(87) International publication number:
**WO 2022/253061 (08.12.2022 Gazette 2022/49)**

(54) **VOICE PROCESSING METHOD AND RELATED DEVICE**

SPRACHVERARBEITUNGSVERFAHREN UND ZUGEHÖRIGE VORRICHTUNG

PROCÉDÉ DE TRAITEMENT DE VOIX ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2021 CN 202110621213**

(43) Date of publication of application:
**13.03.2024 Bulletin 2024/11**

(73) Proprietor: **Huawei Technologies Co., Ltd.
Shenzhen, Guangdong 518129 (CN)**

(72) Inventors:
• **DENG, Liqun
Shenzhen, Guangdong 518129 (CN)**
• **TAN, Daxin
Shenzhen, Guangdong 518129 (CN)**
• **ZHENG, Nianzu
Shenzhen, Guangdong 518129 (CN)**

(74) Representative: **Thun, Clemens
Mitscherlich PartmbB
Patent- und Rechtsanwälte
Karlstraße 7
80333 München (DE)**

(56) References cited:
CN-A- 101 178 895    CN-A- 104 517 605
CN-A- 106 328 145    CN-A- 107 644 646
CN-A- 111 369 968    CN-A- 112 365 879
CN-A- 112 767 910    CN-A- 112 802 444
CN-A- 113 421 547    KR-B1- 102 057 926
US-A1- 2007 016 421    US-A1- 2018 268 806
US-A1- 2020 184 958

• MAX MORRISON ET AL: "Context-Aware
Prosody Correction for Text-Based Speech
Editing", ARXIV.ORG, CORNELL UNIVERSITY
LIBRARY, 201 OLIN LIBRARY CORNELL
UNIVERSITY ITHACA, NY 14853, 16 February
2021 (2021-02-16), XP081887006
• ZEYU JIN ET AL: "VoCo", ACM TRANSACTIONS
ON GRAPHICS, ACM, NY, US, vol. 36, no. 4, 20
July 2017 (2017-07-20), pages 1 - 13,
XP058372870, ISSN: 0730-0301, DOI: 10.1145/
3072959.3073702

EP 4 336 490 B1

## Description

This application claims priority to Chinese Patent Application No. 202110621213.6, filed with the China National Intellectual Property Administration on June 3, 2021, and entitled " SPEECH PROCESSING METHOD AND RELATED DEVICE".

## TECHNICAL FIELD

Embodiments of this application relate to the field of artificial intelligence and the audio application field, and in particular, to a speech processing method and a related device.

## BACKGROUND

Artificial intelligence (artificial intelligence, AI) is a theory, a method, a technology, or an application system that simulates, extends, and expands human intelligence by using a digital computer or a machine controlled by a digital computer, and achieves an optimal result by perceiving an environment, obtaining knowledge, and using the knowledge. In other words, the artificial intelligence technology is a branch of computer science and is intended to understand essence of intelligence and produce a new intelligent machine that can react in a manner similar to human intelligence. Artificial intelligence is to research design principles and implementation methods of various intelligent machines, so that the machines have perception, inference, and decision making functions. Research in the field of artificial intelligence includes robots, natural language processing, computer vision, decision making and inference, human-machine interaction, recommendation and search, AI basic theories, and the like.

Currently, speech editing is of great practical significance. An exemplary approach for speech editing is disclosed in Max Morrison et al.: "Context-Aware Prosody Correction for Text-Based Speech Editing", ARXIV.ORG, CORNELL UNIVERSITY LIBRARY, 201 OLIN LIBRARY CORNELL UNIVERSITY ITHACA, NY 14853, 16 February 2021. For example, in a scenario in which a user records a short video, or a teacher records a teaching speech, errors often occur in some content in a speech due to slips of the tongue. In this case, speech editing may help the user or the teacher conveniently and quickly correct the content errors in the original speech, and generate a corrected speech. A common speech editing method is to pre-construct a database including a large quantity of speech segments, obtain a segment of a speech unit from the database, use the segment to replace an erroneous segment in an original speech, and then generate a corrected speech.

However, the foregoing speech editing manner depends on diversity of speech segments in the database. When the quantity of speech segments in the database is small, auditory perception of the corrected speech is poor.

## SUMMARY

Embodiments of this application provide a speech processing method and a related device, so that auditory perception of an edited speech can be similar to auditory perception of an original speech, thereby improving user experience.

According to a first aspect, an embodiment of this application provides a speech processing method. The method may be applied to a scenario in which a user records a short video, a teacher records a teaching speech, or the like. The method may be performed by a speech processing device, or may be performed by a component (for example, a processor, a chip, or a chip system) of a speech processing device. The speech processing device may be a terminal device or a cloud device. The method includes: obtaining an original speech and a second text, where the second text is a text other than a first text in a target text, both the target text and an original text corresponding to the original speech include the first text, and a speech that is in the original speech and that is corresponding to the first text is a non-edited speech; obtaining a first speech feature based on the non-edited speech; obtaining, based on the first speech feature and the second text by using a neural network, a second speech feature corresponding to the second text; and generating, based on the second speech feature, a target edited speech corresponding to the second text. The first speech feature may be the same as or similar to the second speech feature in terms of a rhythm, a timbre, and/or a signal-to-noise ratio, and the like. The rhythm may reflect an emotional state, a speech form, or the like of a speaker. The rhythm generally refers to a feature such as an intonation, a tone, a stress or an emphasis, a pause, or a cadence.

In addition, the second text may be obtained in a plurality of manners. The second text may be directly obtained. Alternatively, position information (which may also be understood as annotation information used to indicate a position of the second text in the target text) may be obtained first, and then the second text is obtained based on the position and the target text, where the position information is used to indicate the position of the second text in the target text. Alternatively, the target text and the original speech may be obtained (or the target text and the original speech are obtained, and the original text is obtained by recognizing the original speech), and then the second text is determined based on the original text and the target text.

In this embodiment of this application, the second speech feature corresponding to the second text in the target text is obtained by using the first speech feature of the first text in the original speech, that is, the second speech feature of the second text in the target text is generated by referring to the first speech feature of the first text in the original text. Therefore, auditory perception of the target edited speech is similar to auditory perception of the original speech, and user experience is improved.

Optionally, in a possible implementation of the first aspect, the step of obtaining an original speech and a second text includes: receiving the original speech and the second text that are sent by a terminal device; and the method further includes: sending the target edited speech to the terminal device, where the target edited speech is used by the terminal device to generate a target speech corresponding to the target text. It may also be understood that, in an interaction scenario, a cloud device performs a complex computation operation, and a terminal device performs a simple concatenation operation. The original speech and the second text are obtained from the terminal device. After generating the target edited speech, the cloud device sends the target edited speech to the terminal device. Then the terminal device performs concatenation to obtain the target speech.

In this possible implementation, when the speech processing device is the cloud device, on one hand, the cloud device may perform complex computation by interacting with the terminal device, to obtain the target edited speech, and return the target edited speech to the terminal device. Therefore, computing power and storage space of the terminal device can be reduced. On the other hand, the target edited speech corresponding to a modified text may be generated based on a speech feature of a non-editing area in the original speech, and then the target speech corresponding to the target text is generated based on the non-edited speech.

Optionally, in a possible implementation of the first aspect, the step of obtaining an original speech and a second text includes: receiving the original speech and the target text that are sent by a terminal device; and the method further includes: generating, based on the non-edited speech and the target edited speech, a target speech corresponding to the target text, and sending the target speech to the terminal device.

In this possible implementation, the original speech and the target text that are sent by the terminal device are received, the non-edited speech may be obtained, the second speech feature corresponding to the second text is generated based on the first speech feature of the non-edited speech, then the target edited speech is obtained based on a vocoder, and the target edited speech and the non-edited speech are concatenated to generate the target speech. In other words, the speech processing device performs all processing, and returns a result to the terminal device. The cloud device performs complex computation to obtain the target speech, and returns the target speech to the terminal device. Therefore, computing power and storage space of the terminal device can be reduced.

Optionally, in a possible implementation of the first aspect, the step of obtaining an original speech and a second text includes: receiving an editing request from a user, where the editing request includes the original speech and the second text, or the editing request includes the original speech and the target text. The target text may be understood as a text corresponding to a speech that the user wants to generate.

In this possible implementation, the user may modify the text in the original text to obtain the target edited speech corresponding to the modified text (that is, the second text). Therefore, user experience in text-based speech editing is improved.

Optionally, in a possible implementation of the first aspect, the foregoing step further includes: obtaining a position of the second text in the target text, and concatenating, based on the position, the target edited speech and the non-edited speech to obtain a target speech corresponding to the target text. It may also be understood that an edited speech in the original speech is replaced with the target edited speech, and the edited speech is a speech other than the non-edited speech in the original speech.

In this possible implementation, the target edited speech and the non-edited speech may be concatenated based on the position of the second text in the target text. If the first text is an entire overlapping text between the original text and the target text, a speech of a required text (that is, the target text) may be generated without changing the non-edited speech in the original speech.

Optionally, in a possible implementation of the first aspect, the step of obtaining a first speech feature based on the non-edited speech includes: obtaining at least one speech frame in the non-edited speech, and obtaining the first speech feature based on the at least one speech frame, where the first speech feature represents a feature of the at least one speech frame, and the first speech feature is a feature vector or a sequence. In addition, the target speech may be further obtained (in a manner similar to the foregoing). To ensure that a joint between the non-edited speech and the target edited speech is smoother, when there are a plurality of speech frames, a text corresponding to a selected speech frame may be similar to the second text.

In this possible implementation, on one hand, the first speech feature is obtained by using the speech frame in the non-edited speech, so that the generated target edited speech can have a speech feature same as or similar to that of the non-edited speech, and that a difference between auditory perception of the original speech and auditory perception of the target edited speech is reduced. On the other hand, when there are a plurality of speech frames, the text corresponding to the selected speech frame may be similar to the second text, so that when the target speech is generated, the joint between the target edited speech and the non-edited speech is smoother. In addition, the speech feature may be embodied by using a non-physical quantity, for example, by using a sequence or a vector.

Optionally, in a possible implementation of the first aspect, a text corresponding to the at least one speech frame in the foregoing step is a text that is in the first text and that is adjacent to the second text. In other words, the non-edited speech corresponding to the first speech feature is adjacent to a non-edited speech in the target speech.

In this possible implementation, the speech feature of the second text is generated by using the first speech feature of a context of the second text, so that the first speech feature of the context is more referenced by the second speech feature. To be specific, the speech corresponding to the second text is predicted by using the speech frame corresponding to the context, so that a speech feature of the speech frame of the second text is similar to a speech feature of the speech frame of the context, and that auditory perception of the target edited speech of the second text is similar to auditory perception of the original speech.

Optionally, in a possible implementation of the first aspect, the step of obtaining, based on the first speech feature and the second text by using a neural network, a second speech feature corresponding to the second text includes: obtaining, based on the first speech feature, the target text, and annotation information by using the neural network, the second speech feature corresponding to the second text, where the annotation information annotates the second text in the target text. The annotation information may also be understood as position information used to indicate the position of the second text in the target text.

In this possible implementation, the target text is introduced. When the speech feature corresponding to the second text is subsequently generated, reference may be made to the entire target text, to avoid a problem that the target speech obtained by concatenating the subsequently generated target edited speech and the non-edited speech in the original speech does not focus on the target text.

Optionally, in a possible implementation of the first aspect, the neural network includes an encoder and a decoder, and the step of obtaining, based on the first speech feature and the second text by using a neural network, a second speech feature corresponding to the second text includes: obtaining, based on the second text by using the encoder, a first vector corresponding to the second text; and obtaining the second speech feature based on the first vector and the first speech feature by using the decoder. It may also be understood that the first vector and the first speech feature are input into the decoder, so that the second speech feature is obtained.

In this possible implementation, the decoder decodes the first vector by using the first speech feature as a condition, so that the generated second speech feature is similar to the first speech feature, or that the generated second speech feature carries a similar feature (for example, the rhythm, the timbre, and/or the signal-to-noise ratio) in the first speech feature.

Optionally, in a possible implementation of the first aspect, the step of obtaining, based on the second text by using the encoder, a first vector corresponding to the second text includes: obtaining the first vector based on the target text by using the encoder. It may also be understood that the target text and the position information are input into the encoder, so that the first vector is obtained, where the position information is used to indicate the position of the second text in the target text.

In this possible implementation, the target text in which the second text is located is introduced in an encoding process of the encoder, so that the generated first vector of the second text refers to the target text, and that the second text described by the first vector is more accurate.

Optionally, in a possible implementation of the first aspect, the foregoing step further includes: predicting first duration and second duration based on the target text by using a prediction network, where the first duration is phoneme duration corresponding to the first text in the target text, and the second duration is phoneme duration corresponding to the second text in the target text; and correcting the second duration based on the first duration and third duration, to obtain first corrected duration, where the third duration is phoneme duration of the first text in the original speech, and the obtaining the second speech feature based on the first vector and the first speech feature by using the decoder includes: obtaining the second speech feature based on the first vector, the first speech feature, and the first corrected duration by using the decoder.

In this possible implementation, to ensure that a speaking speed of the target edited speech corresponding to the second text is consistent with a speaking speed of the non-edited speech, the duration of the target edited speech may be corrected.

Optionally, in a possible implementation of the first aspect, the step of correcting the second duration based on the first duration and third duration, to obtain first corrected duration includes: calculating a ratio of the third duration to the first duration; and obtaining the first corrected duration based on the ratio.

In this possible implementation, the second duration is corrected by using the ratio of the third duration to the first duration. In this way, consistency between the duration of the target edited speech corresponding to the second text and the speaking speed of the non-edited speech can be improved.

Optionally, in a possible implementation of the first aspect, the step of obtaining the second speech feature based on the first vector, the first speech feature, and the first corrected duration by using the decoder includes: performing upsampling on the first vector based on the first corrected duration, to obtain a second vector; and obtaining the second speech feature based on the second vector and the first speech feature by using the decoder. Specifically, the second vector and the first speech feature are input into the decoder, so that the second speech feature is obtained. When the decoder includes a plurality of decoding units connected in series, the second vector and the first speech feature may be input into a same decoding unit, or may be input into different decoding units, or the like.

In this possible implementation, performing upsampling on the first vector based on the first corrected duration may also be understood as extending the first vector by using the first corrected duration, to obtain the second vector, so that the duration of the target edited speech is consistent with the speaking speed of the non-edited speech.

Optionally, in a possible implementation of the first aspect, the foregoing step further includes: predicting fourth duration based on the second text by using a prediction network, where the fourth duration is total duration of all phonemes corresponding to the second text; obtaining a speaking speed of the original speech; and correcting the fourth duration based on the speaking speed to obtain second corrected duration; and the obtaining the second speech feature based on the first vector and the first speech feature by using the decoder includes: obtaining the second speech feature based on the first vector, the first speech feature, and the second corrected duration by using the decoder.

In this possible implementation, duration of the speech frame corresponding to the second text is adjusted by using phonemes of the original speech, so that consistency between the duration of the target edited speech corresponding to the second text and the speaking speed of the non-edited speech can be improved.

Optionally, in a possible implementation of the first aspect, the step of obtaining the second speech feature based on the first vector and the first speech feature by using the decoder includes: decoding, based on the decoder and the first speech feature, the first vector from the target text in a forward order or a reverse order to obtain the second speech feature. For example, if the target text is "jin tian kai xin (Happy today)", the forward order is an order from "jin" to "xin", and the reverse order is an order from "xin" to "jin".

In this possible implementation, the encoder may predict the second speech feature by using a forward order direction or a reverse order direction of the text.

Optionally, in a possible implementation of the first aspect, the second text is in a middle area of the target text, or the second text is not at two ends of the target text. The obtaining the second speech feature based on the first vector and the first speech feature by using the decoder includes: decoding, based on the decoder and the first speech feature, the first vector from the target text in a forward order to obtain a third speech feature; decoding, based on the decoder and the first speech feature, the first vector from the target text in a reverse order to obtain a fourth speech feature; and obtaining the second speech feature based on the third speech feature and the fourth speech feature.

In this possible implementation, the decoder is a bidirectional decoder, and two speech features corresponding to the second text may be obtained by using both left and right sides (that is, the forward order and the reverse order), and the second speech feature is obtained based on the two speech features, so that the second speech feature is more similar to the feature of the first text in the original speech, thereby improving an auditory effect of the target edited speech.

Optionally, in a possible implementation of the first aspect, the second text includes a third text and a fourth text, the third speech feature is a speech feature corresponding to the third text, and the fourth speech feature is a speech feature corresponding to the fourth text; and the obtaining the second speech feature based on the third speech feature and the fourth speech feature includes: concatenating the third speech feature and the fourth speech feature to obtain the second speech feature.

In this possible implementation, a part of speech features are selected from a forward-order direction, another part of speech features are selected from a reverse order direction, and this part of speech features and the another part of speech features are concatenated, so that the entire speech feature is obtained.

Optionally, in a possible implementation of the first aspect, the third speech feature in the foregoing step is a speech feature that is corresponding to the second text and that is obtained by the decoder based on the forward order, and the fourth speech feature is a speech feature that is corresponding to the second text and that is obtained by the decoder based on the reverse order; and the obtaining the second speech feature based on the third speech feature and the fourth speech feature includes: determining, in the third speech feature and the fourth speech feature, a speech feature whose similarity is greater than a first threshold as a transitional speech feature, and concatenating a fifth speech feature and a sixth speech feature to obtain the second speech feature, where the fifth speech feature is captured from the third speech feature based on a position of the transitional speech feature in the third speech feature, and the sixth speech feature is captured from the fourth speech feature based on a position of the transitional speech feature in the fourth speech feature.

In this possible implementation, the second speech feature is selected from the two complete speech features in a complementary manner by using the transitional speech feature in the two complete speech features, so that both the forward order and the reverse order are referenced by the second speech feature. In this way, a similarity between the second speech feature and the first speech feature is improved.

Optionally, in a possible implementation of the first aspect, the step of generating, based on the second speech feature, a target edited speech corresponding to the second text includes: generating the target edited speech based on the second speech feature by using a vocoder.

In this possible implementation, the second speech feature is converted into the target edited speech based on the vocoder, so that the target edited speech has a speech feature similar to that of the original speech, thereby improving auditory perception of the user.

Optionally, in a possible implementation of the first aspect, the first speech feature in the foregoing step carries a voiceprint feature of the original speech. A manner of obtaining the voiceprint feature may be directly obtaining the voiceprint feature, or may be obtaining the voiceprint feature by recognizing the original speech, or the like.

In this possible implementation, on one hand, the voiceprint feature of the original speech is introduced, so that the subsequently generated second speech feature also carries the voiceprint feature of the original speech, thereby improving a similarity between the target edited speech and the original speech. On the other hand, when there are a plurality of speakers (or users), introducing the voiceprint feature can improve a similarity between a subsequently predicted speech feature and a voiceprint of a speaker of the original speech.

Optionally, in a possible implementation of the first aspect, the foregoing step further includes: determining the non-edited speech based on the target text, the original text, and the original speech, which may be specifically: determining the first text based on the target text and the original text; and determining the non-edited speech based on the first text, the original text, and the original speech.

In this possible implementation, the non-edited speech of the first text in the original speech is determined by comparing the original text with the original speech, so that the first speech feature is generated subsequently.

Optionally, in a possible implementation of the first aspect, the step of determining the first text based on the target text and the original text includes: determining an overlapping text based on the target text and the original text; displaying the overlapping text to the user; and determining the first text from the overlapping text in response to a second operation of the user.

In this possible implementation, the first text may be determined based on the operation of the user. On one hand, operability of speech editing by the user can be improved. On the other hand, in comparison with using an overlapping text, reference may be made to more speech features of the non-edited speech, to improve auditory perception of the target edited speech.

Optionally, in a possible implementation of the first aspect, the neural network is obtained by training the neural network by using training data as an input of the neural network and using a value of a loss function less than a second threshold as a target. The training data includes a training speech and a training text corresponding to the training speech. The loss function is used to indicate a difference between a speech feature output by the neural network and an actual speech feature, and the actual speech feature is obtained by using the training speech.

In this possible implementation, the neural network is trained to reduce the value of the loss function, that is, to continuously reduce the difference between the speech feature output by the neural network and the actual speech feature. In this way, the second speech feature output by the neural network is more accurate.

Optionally, in a possible implementation of the first aspect, the step of determining the non-edited speech based on the first text, the original text, and the original speech includes: determining start and end positions of each phoneme in the original text in the original speech; and determining the non-edited speech based on the start and end positions and the first text.

In this possible implementation, the non-edited speech is determined based on the start and end positions of the phoneme in the original speech and the first text, so that the determined non-edited speech is more accurate in a phoneme dimension.

Optionally, in a possible implementation of the first aspect, the first speech feature and the second speech feature are Mel spectral features.

According to a second aspect, this application provides a speech processing device, including a processor. The processor is coupled to a memory. The memory is configured to store a program or instructions. When the program or instructions are executed by the processor, the speech processing device is enabled to implement the method according to any one of the first aspect or the possible implementations of the first aspect.

According to a third aspect, this application provides a computer-readable medium. The computer-readable medium stores a computer program or instructions. When the computer program or instructions are run on a computer, the computer is enabled to perform the method according to any one of the first aspect or the possible implementations of the first aspect.

For technical effects brought by any one of the second aspect or the third aspect, or the possible implementations thereof, refer to technical effects brought by the first aspect or different possible implementations of the first aspect. Details are not described herein again.

As can be learned from the foregoing technical solutions, the embodiments of this application have the following advantages: The second speech feature corresponding to the second text in the target text is obtained by using the first speech feature of the first text in the original speech, that is, the second speech feature of the second text in the target text is generated by referring to the first speech feature of the first text in the original text. Therefore, auditory perception of the target edited speech is similar to auditory perception of the original speech, and user experience is improved.

**BRIEF DESCRIPTION OF DRAWINGS**

FIG. 1 is a schematic diagram of a structure of a system architecture according to this application;

FIG. 2 is a schematic diagram of a structure of a convolutional neural network according to this application;

FIG. 3 is a schematic diagram of a structure of another convolutional neural network according to this application;

FIG. 4 is a schematic diagram of a hardware structure of a chip according to this application;

FIG. 5 is a schematic flowchart of a neural network training method according to this application;

FIG. 6 is a schematic diagram of a structure of a neural network according to this application;

FIG. 7 is a schematic flowchart of a speech processing method according to this application;

FIG. 8 to FIG. 10 are several schematic diagrams of a display interface of a speech processing device according to this application;

FIG. 11 is a schematic diagram of a structure of a bidirectional decoder according to this application;

FIG. 12 is another schematic diagram of a display interface of a speech processing device according to this application;

FIG. 13 is another schematic flowchart of a speech processing method according to this application; and

FIG. 14 to FIG. 18 are several schematic diagrams of structures of a speech processing device according to this application.

**DESCRIPTION OF EMBODIMENTS**

Embodiments of this application provide a speech processing method and a related device, so that auditory perception of an edited speech can be similar to auditory perception of an original speech, thereby improving user experience.

The following describes the technical solutions in the embodiments of this application with reference to the accompanying drawings in the embodiments of this application. Apparently, the described embodiments are only some rather than all of the embodiments of this application.

For ease of understanding, the following first describes related terms and concepts mainly used in the embodiments of this application.

1. Neural network

The neural network may include a neuron. The neuron may be an arithmetic unit that uses $X_s$ and an intercept of 1 as an input. An output of the arithmetic unit may be as follows:

$$h_{W,b}(x) = f(W^T x) = f\left(\sum_{s=1}^{n} W_s x_s + b\right),$$

where s = 1, 2, ..., n, n is a natural number greater than 1, $W_s$ is a weight of $X_s$, and b is a bias of the neuron; and f is an activation function (activation function) of the neuron, and is used to introduce a nonlinear feature into the neural network, to convert an input signal in the neuron into an output signal. The output signal of the activation function may serve as an input of a next convolutional layer. The activation function may be a sigmoid function. The neural network is a network formed by connecting a plurality of single neurons together, that is, an output of one neuron may be an input of another neuron. An input of each neuron may be connected to a local receptive field of a previous layer to extract a feature of the local receptive field. The local receptive field may be a region including several neurons.

2. Deep neural network

The deep neural network (deep neural network, DNN), also referred to as a multilayer neural network, may be understood as a neural network having a plurality of hidden layers. There is no special metric for "plurality" herein. The DNN is divided based on positions of different layers, and a neural network in the DNN may be divided into three types of layers: an input layer, a hidden layer, and an output layer. Generally, a first layer is the input layer, a last layer is the output layer, and all intermediate layers are hidden layers. Layers are fully connected to each other, that is, any neuron at an $i^{th}$ layer is definitely connected to any neuron at an $(i+1)^{th}$ layer. Certainly, the deep neural network may alternatively not include a hidden layer. This is not specifically limited herein.

Work at each layer of the deep neural network may be described by using a mathematical expression $\vec{y} = \alpha(W\vec{x} + \vec{b})$. From a physical layer, work at each layer of the deep neural network may be understood as completing transformation from input space to output space (that is, from row space to column space of a matrix) by performing five operations on the input space (a set of input vectors). The five operations include: 1. dimension increasing or dimension reduction; 2. scaling up/down; 3. rotation; 4. translation; and 5. "bending". The operation 1, the operation 2, and the operation 3 are completed by $W\vec{x}$, the operation 4 is completed by $+\vec{b}$, and the operation 5 is implemented by $\alpha()$. The word "space" is used herein for expression because a classified object is not a single thing, but a type of thing. Space is a set of all individuals of this type of thing. $W$ is a weight vector, and each value in the vector indicates a weight value of one neuron at this layer of the neural network. The vector $W$ determines space transformation from the input space to the output space described above. In other words, a weight $W$ at each layer controls how to transform space. A purpose of training the deep neural network is to finally obtain a weight matrix (a weight matrix formed by vectors $W$ at a plurality of layers) at all layers of a trained neural network. Therefore, the training process of the neural network is essentially a manner of learning control of space transformation, and more specifically, learning a weight matrix.

3. Convolutional neural network

The convolutional neural network (CNN) is a deep neural network with a convolutional structure. The convolutional neural network includes a feature extractor including a convolutional layer and a subsampling layer. The feature extractor may be considered as a filter. A convolution process may be considered as performing convolution by using a trainable filter and an input image or a convolution feature map. The convolutional layer is a neuron layer for performing convolution processing on an input signal in the convolutional neural network. At the convolutional layer of the convolutional neural network, one neuron may be connected to only some neurons at adjacent layers. The convolutional layer usually includes several feature maps, and each feature map may include some neurons arranged in a rectangular form. Neurons on a same feature map share a weight, and the weight shared herein is a convolution kernel. Weight sharing may be understood as "a manner of extracting image information is independent of positions". A principle implied herein is that statistical information of a part of an image is the same as that of other parts. This means that image information learned in a part can also be used in another part. Therefore, the same image information obtained through learning can be used for all positions on the image. At a same convolutional layer, a plurality of convolution kernels may be used to extract different image information. Usually, a larger quantity of convolution kernels indicates richer image information reflected in a convolution operation.

The convolution kernel may be initialized in a form of a matrix of a random size. In a process of training the convolution neural network, an appropriate weight may be obtained for the convolution kernel through learning. In addition, a direct benefit of weight sharing is to reduce connections between the layers of the convolutional neural network while reducing a risk of overfitting. In the embodiments of this application, networks such as a separation network, an identification network, a detection network, and a deep estimation network may all be CNNs.

4. Recurrent neural network (RNN)

In a conventional neural network model, layers are fully connected, and nodes between layers are not connected. However, this common neural network cannot resolve many problems. For example, to predict a next word of a sentence, a previous word is usually used because the previous word and the next words in the sentence are not independent. The recurrent neural network (recurrent neural network, RNN) means that a current output of a sequence is also related to a previous output. A specific representation form is that the network memorizes previous information, saves the information in an internal state of the network, and applies the information to computation of a current output.

5. Loss function

In the process of training the deep neural network, because it is expected that an output of the deep neural network is as close as possible to a predicted value that is really desired, a predicted value of the current network may be compared with a really desired target value, and then a weight vector at each layer of the neural network is updated based on a difference between the predicted value and the really desired target value (certainly, there is usually an initialization process before a first update, that is, parameters are preconfigured for each layer of the deep neural network). For example, if the predicted value of the network is large, the weight vector is adjusted, so that the predicted value of the network is smaller, and the adjustment is continued until the neural network can predict the really desired target value. Therefore, "how to obtain, through comparison, the difference between the predicted value and the target value" needs to be predefined. This is the loss function or an objective function. The loss function and the objective function are important equations for measuring the difference between the predicted value and the target value. The loss function is used as an example. If an output value (loss) of the loss function is larger, it indicates that the difference is greater, and training of the deep neural network becomes a process of minimizing the loss.

6. Text to speech

Text to speech (text to speech, TTS) is a program or software system that converts a text into a speech.

7. Vocoder

The vocoder is a sound signal processing module or software that can encode an acoustic feature to generate a sound waveform.

8. Fundamental frequency

When a sound is emitted by a sound source due to vibration, the sound may be generally decomposed into many simple sine waves, that is, all natural sounds are basically formed by many sine waves with different frequencies. A sine wave with a lowest frequency is a fundamental sound (that is, a fundamental frequency, which may be represented by F0), and other sine waves with higher frequencies are overtones.

9. Rhythm

In the field of speech synthesis, the rhythm generally refers to a feature such as control of an intonation, a tone, a stress or an emphasis, a pause, or a cadence. The rhythm may reflect an emotional state, a speech form, or the like of a speaker.

10. Phoneme

The phoneme (phoneme) is a minimum speech unit obtained by dividing a speech based on natural attributes. It is analyzed based on a pronunciation action in a syllable. One action forms one phoneme. Phonemes are classified into vowels and consonants. For example, a Chinese syllable a (for example, the first tone: a (ah)) has only one phoneme, ai (for example, the fourth tone: ai (love)) has two phonemes, and dai (for example, the first tone: dai (in a daze)) has three phonemes.

11. Word vector (Embedding)

The word vector may also be referred to as "word embedding", "vectorization", "vector mapping", "embedding", or the like. Formally, the word vector is a dense vector used to represent an object. For example, a vector represents a user identity card number (identity document, ID), an item ID, or the like.

12. Speech feature

Speech feature: A processed speech signal is converted into a simple and logical representation form, which is more discriminative and reliable than an actual signal. After a segment of a speech signal is obtained, a speech feature may be extracted from the speech signal. In an extraction method, a multidimensional feature vector is usually extracted for each speech signal. There are many parameterized representation methods for speech signals, such as perceptual linear prediction (perceptual linear prediction, PLP), linear predictive coding (linear predictive coding, LPC), and frequency cepstrum coefficient (Mel frequency cepstrum coefficient, MFCC).

Currently, there are more scenarios of speech editing, for example, a scenario in which a user records a short video or a teacher records a teaching speech. To correct a content error in an original speech caused by a slip of the tongue, speech editing is usually used. A current speech editing manner is to obtain a speech segment from a database, use the speech segment to replace erroneous content, and then generate a corrected speech.

However, this manner is excessively dependent on the speech segment stored in the database. If there is a great difference between the speech segment and the original speech in terms of a timbre, a rhythm, a signal-to-noise ratio, and the like, the corrected speech is not coherent, and the rhythm is unnatural, resulting in poor auditory perception of the corrected speech.

To resolve the foregoing problem, this application provides a speech editing method. A second speech feature of modified content is determined by referring to a first speech feature corresponding to a context of to-be-modified content, and a target edited speech corresponding to a second text is generated based on the second speech feature, so that auditory perception of the target edited speech is similar to auditory perception of an original speech, thereby improving user experience.

The following describes the technical solutions in the embodiments of this application with reference to the accompanying drawings in the embodiments of this application. Apparently, the described embodiments are only some rather than all of the embodiments of this application.

The following first describes a system architecture provided in an embodiment of this application.

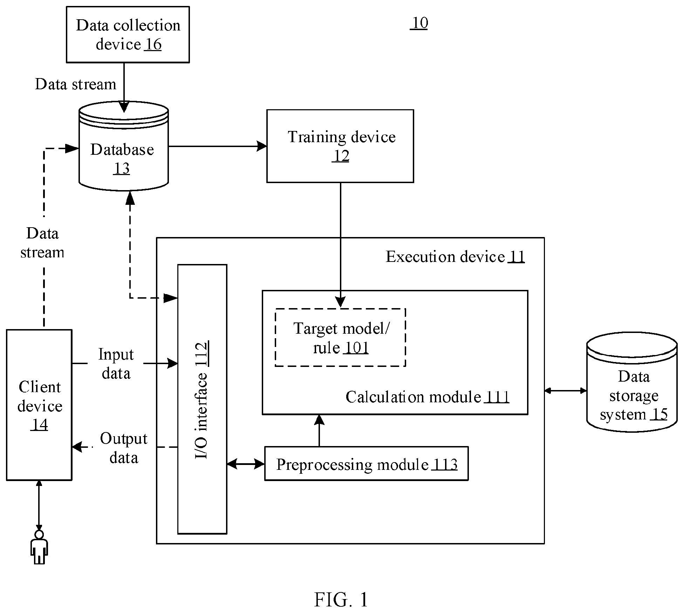

Referring to FIG. 1, an embodiment of this application provides a system architecture 10. As shown in the system architecture 10, a data collection device 16 is configured to collect training data. In this embodiment of this application, the training data includes a training speech and a training text corresponding to the training speech. The training data is stored in a database 13, and a training device 12 obtains a target model/rule 101 through training based on the training data maintained in the database 13. The following describes in more detail how the training device 12 obtains the target model/rule 101 based on the training data. The target model/rule 101 can be used to implement a speech processing method provided in an embodiment of this application. To be specific, related preprocessing is performed on a text, and then the text is input into the target model/rule 101, so that a speech feature of the text can be obtained. The target model/rule 101 in this embodiment of this application may be specifically a neural network. It should be noted that in an actual application, the training data maintained in the database 13 is not necessarily all collected by the data collection device 16, but may be received from another device. In addition, it should be noted that the training device 12 does not necessarily train the target model/rule 101 completely based on the training data maintained by the database 13, but may obtain the training data from a cloud or another place to perform model training. The foregoing description should not be used as a limitation on this embodiment of this application.

The target model/rule 101 obtained through training by the training device 12 may be applied to different systems or devices, for example, applied to an execution device 11 shown in FIG. 1. The execution device 11 may be a terminal, such as a mobile phone terminal, a tablet computer, a notebook computer, a AR or VR device, or an in-vehicle terminal, or may be a server, a cloud, or the like. In FIG. 1, the execution device 11 is provided with an I/O interface 112, configured to exchange data with an external device. A user may input data to the I/O interface 112 by using a client device 14. In this embodiment of this application, the input data may include a first speech feature, a target text, and annotation information, or the input data may include a first speech feature and a second text. In addition, the input data may be input by the user, or may be uploaded by the user by using another device, or certainly may be from the database. This is not specifically limited herein.

If the input data includes the first speech feature, the target text, and annotation information, a preprocessing module 113 is configured to perform preprocessing based on the target text and the annotation information that are received by the I/O interface 112. In this embodiment of this application, the preprocessing module 113 may be configured to determine a target edited text in the target text based on the target text and the annotation information. If the input data includes the first speech feature and the second text, the preprocessing module 113 is configured to perform preprocessing based on the target text and the annotation information that are received by the I/O interface 112, for example, perform preparation work such as converting the second text into a phoneme.

When the execution device 11 preprocesses the input data, or when a calculation module 111 of the execution device 11 performs related processing such as calculation, the execution device 11 may invoke data, code, or the like in a data storage system 15 for corresponding processing. Data, instructions, or the like obtained through corresponding processing may also be stored in the data storage system 15.

Finally, the I/O interface 112 returns a processing result such as an obtained second speech feature to the client device 14, and provides the processing result for the user.

It should be noted that the training device 12 may generate corresponding target models/rules 101 for different targets or different tasks based on different training data. The corresponding target models/rules 101 may be used to implement the foregoing targets or complete the foregoing tasks, to provide a required result for the user or provide an input for subsequent other processing.

In a case shown in FIG. 1, the user may manually provide input data. The input data may be manually provided by performing an operation on an interface provided by the I/O interface 112. In another case, the client device 14 may automatically send input data to the I/O interface 112. If it is required that the client device 14 should obtain authorization from the user to automatically send the input data, the user may set a corresponding permission on the client device 14. The user may view, on the client device 14, a result output by the execution device 11. Specifically, the result may be presented in a specific manner, for example, display, a sound, or an action. The client device 14 may alternatively be used as a data collection end to collect, as new sample data, input data that is input to the I/O interface 112 and an output result that is output from the I/O interface 112, as shown in the figure, and store the new sample data in the database 13. Certainly, the client device 14 may alternatively not perform collection. Instead, the I/O interface 112 directly stores, as new sample data in the database 13, input data that is input to the I/O interface 112 and an output result that is output from the I/O interface 112.

It should be noted that FIG. 1 is merely a schematic diagram of the system architecture according to this embodiment of this application. A position relationship between devices, components, modules, and the like shown in the figure constitutes no limitation. For example, in FIG. 1, the data storage system 15 is an external memory relative to the execution device 11. In another case, the data storage system 15 may alternatively be disposed in the execution device 11.

As shown in FIG. 1, the target model/rule 101 is obtained through training by the training device 12. The target model/rule 101 may be a neural network in this embodiment of this application. Specifically, in the network provided in this embodiment of this application, the neural network may be a recurrent neural network, a long short-term memory network, or the like. A prediction network may be a convolutional neural network, a recurrent neural network, or the like.

Optionally, the neural network and the prediction network in this embodiment of this application may be two separate networks, or may be a multi-task neural network. One task is to output duration, and the other task is to output a speech feature.

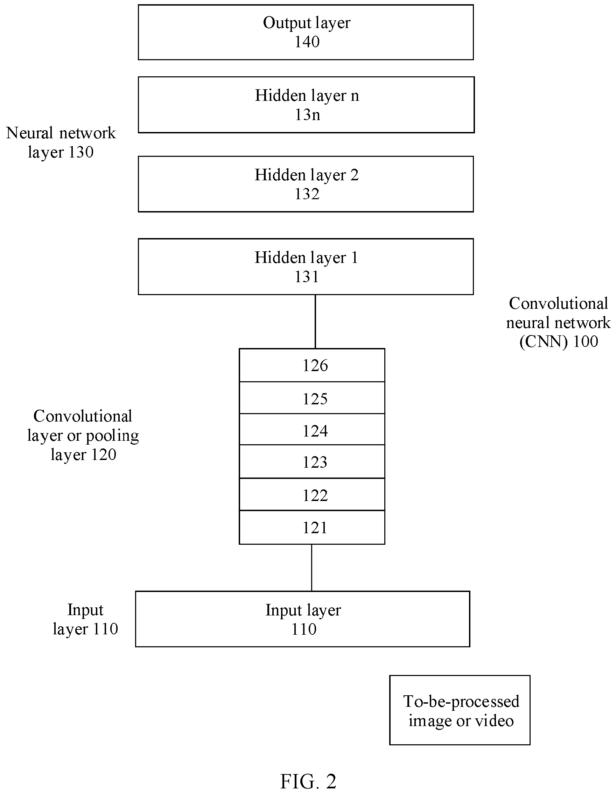

Because the CNN is a very common neural network, the following describes a structure of the CNN in detail with reference to FIG. 2. As described in the foregoing basic concepts, the convolutional neural network is a deep neural network with a convolutional structure and is a deep learning (deep learning) architecture. In the deep learning architecture, multilayer learning is performed at different abstraction levels according to a machine learning algorithm. As a deep learning architecture, the CNN is a feed-forward (feed-forward) artificial neural network, and each neuron in the feed-forward artificial neural network may respond to an input image.

As shown in FIG. 2, a convolutional neural network (CNN) 100 may include an input layer 110, a convolutional layer or pooling layer 120, and a neural network layer 130, where the pooling layer is optional.

Convolutional layer or pooling layer 120:

Convolutional layer:

As shown in FIG. 2, for example, the convolutional layer or pooling layer 120 may include layers 121 to 126. In an implementation, the layer 121 is a convolutional layer, the layer 122 is a pooling layer, the layer 123 is a convolutional layer, the layer 124 is a pooling layer, the layer 125 is a convolutional layer, and the layer 126 is a pooling layer. In another implementation, the layers 121 and 122 are convolutional layers, the layer 123 is a pooling layer, the layers 124 and 125 are convolutional layers, and the layer 126 is a pooling layer. In other words, an output of a convolutional layer may be used as an input of a subsequent pooling layer, or may be used as an input of another convolutional layer to continue a convolution operation.

The convolutional layer 121 is used as an example. The convolutional layer 121 may include a plurality of convolution operators. A convolution operator is also referred to as a kernel. In image processing, the convolution operator functions as a filter that extracts specific information from an input image matrix. The convolution operator may be essentially a weight matrix, and the weight matrix is usually predefined. In a process of performing a convolution operation on an image, the weight matrix is usually used to process pixels at a granularity of one pixel (or two pixels, depending on a value of a stride (stride)) in a horizontal direction on the input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolution output of a single depth dimension is generated by performing convolution with a single weight matrix. However, in most cases, a plurality of weight matrices with a same dimension rather than the single weight matrix are used. Outputs of the weight matrices are stacked to form a depth dimension of a convolutional image. Different weight matrices may be used to extract different features of the image. For example, one weight matrix is used to extract edge information of the image, another weight matrix is used to extract a specific color of the image, still another weight matrix is used to blur unnecessary noise in the image, and so on. Because the plurality of weight matrices have the same dimension, feature maps extracted by using the plurality of weight matrices with the same dimension also have a same dimension. Then the plurality of extracted feature maps with the same dimension are combined to form an output of the convolution operation.

Weight values in the weight matrices need to be obtained through massive training in an actual application. Each weight matrix formed by using the weight values obtained through training may be used to extract information from the input image, to help the convolutional neural network 100 perform correct prediction.

When the convolutional neural network 100 includes a plurality of convolutional layers, a larger quantity of general features are usually extracted at an initial convolutional layer (for example, the convolutional layer 121). The general features may be also referred to as low-level features. As a depth of the convolutional neural network 100 increases, a feature such as a high-level semantic feature extracted at a more subsequent convolutional layer (for example, the convolutional layer 126) is more complex. A feature with higher semantics is more applicable to a to-be-resolved problem.

Pooling layer:

Because a quantity of training parameters usually needs to be reduced, a pooling layer usually needs to be periodically introduced after a convolutional layer. To be specific, for the layers 121 to 126 in the layer 120 shown in FIG. 2, one convolutional layer may be followed by one pooling layer, or a plurality of convolutional layers may be followed by one or more pooling layers. During image processing, a sole purpose of the pooling layer is to reduce a space size of the image. The pooling layer may include an average pooling operator and/or a maximum pooling operator, to perform sampling on an input image to obtain an image with a relatively small size. The average pooling operator may calculate a pixel value in the image within a specific range, to generate an average value. The maximum pooling operator may be used to select a pixel with a maximum value within a specific range as a maximum pooling result. In addition, similar to a case in which a size of a weight matrix in the convolutional layer should be related to a size of the image, an operator in the pooling layer should also be related to the size of the image. A size of a processed image output from the pooling layer may be less than a size of an image input into the pooling layer. Each pixel in the image output from the pooling layer represents an average value or a maximum value of a corresponding sub-region of the image input into the pooling layer.

Neural network layer 130:

After processing is performed by the convolutional layer or pooling layer 120, the convolutional neural network 100 still cannot output required output information. As described above, the convolutional layer or pooling layer 120 only extracts features and reduces parameters resulting from the input image. However, to generate final output information (required class information or other related information), the convolutional neural network 100 needs to use the neural network layer 130 to generate an output of one required class or outputs of a group of required classes. Therefore, the neural network layer 130 may include a plurality of hidden layers (131, and 132 to 13n shown in FIG. 2) and an output layer 140. Parameters included in the plurality of hidden layers may be obtained by performing pre-training based on related training data of a specific task type. For example, the task type may include image recognition, image classification, super-resolution image reconstruction, and the like.

At the neural network layer 130, the plurality of hidden layers are followed by the output layer 140, that is, the last layer of the entire convolutional neural network 100. The output layer 140 has a loss function similar to a categorical cross entropy, and the loss function is specifically configured to calculate a prediction error. Once forward propagation of the entire convolutional neural network 100 (for example, propagation from 110 to 140 in FIG. 2 is forward propagation) is completed, back propagation (for example, propagation from 140 to 110 in FIG. 2 is back propagation) is started to update a weight value and a deviation of each layer mentioned above, to reduce a loss of the convolutional neural network 100 and an error between a result output by the convolutional neural network 100 through the output layer and an ideal result.

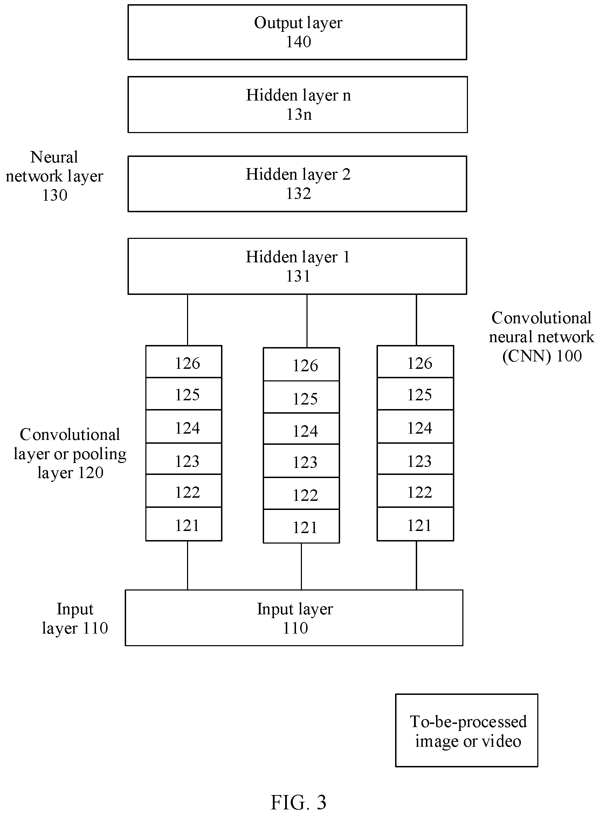

It should be noted that the convolutional neural network 100 shown in FIG. 2 is used only as an example of a convolutional neural network. In a specific application, the convolutional neural network may alternatively exist in a form of another network model, for example, a plurality of parallel convolutional layers/pooling layers shown in FIG. 3, and extracted features are all input to the entire neural network layer 130 for processing.

The following describes a hardware structure of a chip according to an embodiment of this application.

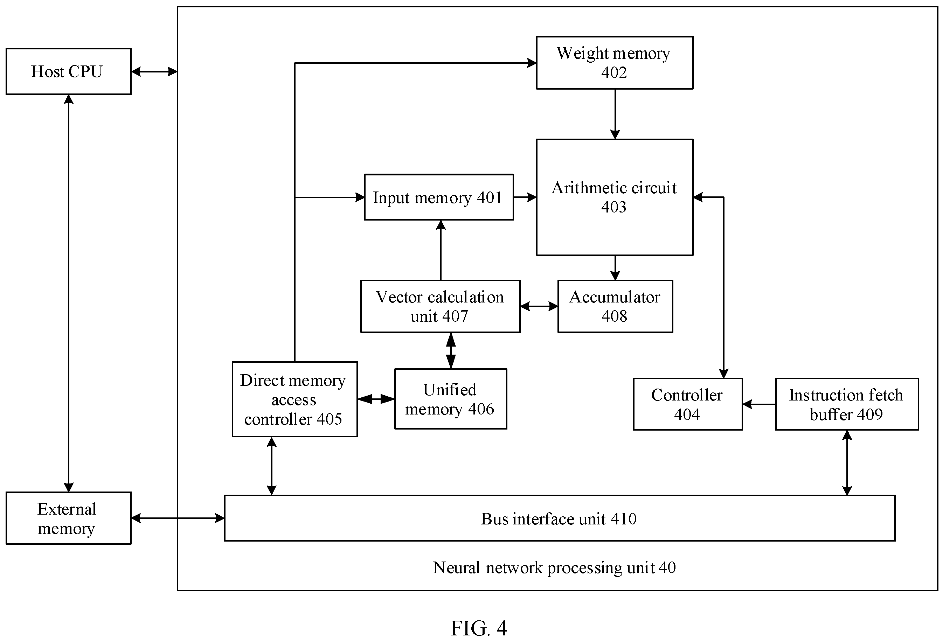

FIG. 4 shows a hardware structure of a chip according to an embodiment of this application. The chip includes a neural network processing unit 40. The chip may be disposed in the execution device 110 shown in FIG. 1, to complete calculation work of the calculation module 111. Alternatively, the chip may be disposed in the training device 120 shown in FIG. 1, to complete training work of the training device 120 and output the target model/rule 101. An algorithm of each layer in the convolutional neural network shown in FIG. 2 may be implemented in the chip shown in FIG. 4.

The neural network processing unit 40 may be any processor suitable for large-scale exclusive OR operation processing, for example, a neural-network processing unit (neural-network processing unit, NPU), a tensor processing unit (tensor processing unit, TPU), or a graphics processing unit (graphics processing unit, GPU). The NPU is used as an example. The neural network processing unit NPU 40 serves as a coprocessor, and the NPU is mounted to a host central processing unit (central processing unit, CPU) (host CPU). The host CPU assigns a task. A core part of the NPU is an arithmetic circuit 403. A controller 404 controls the arithmetic circuit 403 to extract data in a memory (a weight memory or an input memory) and perform an operation.

In some implementations, the arithmetic circuit 403 includes a plurality of processing units. In some implementations, the arithmetic circuit 403 is a two-dimensional systolic array. The arithmetic circuit 403 may alternatively be a one-dimensional systolic array or another electronic circuit capable of performing mathematical operations such as multiplication and addition. In some implementations, the arithmetic circuit 403 is a general-purpose matrix processor.

For example, it is assumed that there is an input matrix A, a weight matrix B, and an output matrix C. The arithmetic circuit fetches data of the matrix B from a weight memory 402, and buffers the data on each PE in the arithmetic circuit. The arithmetic circuit fetches data of the matrix A from an input memory 401, performs a matrix operation on the data with the matrix B, and stores an obtained partial result or final result of the matrix in an accumulator 408.

A vector calculation unit 407 may perform further processing, for example, vector multiplication, vector addition, an exponential operation, a logarithmic operation, and value comparison on an output of the arithmetic circuit. For example, the vector calculation unit 407 may be configured to perform network calculation, such as pooling (pooling), batch normalization (batch normalization), or local response normalization (local response normalization) at a non-convolutional/non-FC layer in a neural network.

In some implementations, the vector calculation unit 407 can store a processed and output vector in a unified memory 406. For example, the vector calculation unit 407 may apply a non-linear function to the output of the arithmetic circuit 403, for example, accumulate value vectors to generate an activation value. In some implementations, the vector calculation unit 407 generates a normalized value, a combined value, or both. In some implementations, the processed output vector can be used as an activation input to the arithmetic circuit 403, for example, for use at a subsequent layer of the neural network.

The unified memory 406 is configured to store input data and output data.

For weight data, a direct memory access controller (direct memory access controller, DMAC) 405 directly transfers input data in an external memory to the input memory 401 and/or the unified memory 406, stores weight data in the external memory to the weight memory 402, and stores data in the unified memory 406 to the external memory.

A bus interface unit (bus interface unit, BIU) 410 is configured to implement interaction between the host CPU, the DMAC, and an instruction fetch buffer 409 by using a bus.

The instruction fetch buffer (instruction fetch buffer) 409 connected to the controller 404 is configured to store instructions used by the controller 404.

The controller 404 is configured to invoke the instructions buffered in the instruction fetch buffer 409, to control a working process of the arithmetic accelerator.

Generally, the unified memory 406, the input memory 401, the weight memory 402, and the instruction fetch buffer 409 may all be on-chip (on-chip) memories. The external memory may be a memory outside the NPU, and the external memory may be a double data rate synchronous dynamic random access memory (double data rate synchronous dynamic random access memory, DDR SDRAM for short), a high bandwidth memory (high bandwidth memory, HBM), or another readable and writable memory.

An operation at each layer of the recurrent neural network shown in FIG. 2 or FIG. 3 may be performed by the arithmetic circuit 403 or the vector calculation unit 407.

First, a scenario to which a speech processing method provided in an embodiment of this application is applicable is described. The speech processing method may be applied to a scenario in which speech content needs to be modified, for example, a user records a short video, or a teacher records a teaching speech. For example, the speech processing method is applicable to an application program, software, or a speech processing device that has a speech editing function, such as a smart voice assistant or a smart speaker, on a mobile phone, a computer, or a wearable terminal that can make a sound.

The speech processing device is a terminal device configured to serve a user, or a cloud device. The terminal device may include a head mounted display (head mount display, HMD) device. The head mounted display device may be a combination of a virtual reality (virtual reality, VR) box and a terminal, an all-in-one VR headset, a personal computer (personal computer, PC), an augmented reality (augmented reality, AR) device, a mixed reality (mixed reality, MR) device, or the like. The terminal device may further include a cellular phone (cellular phone), a smartphone (smartphone), a personal digital assistant (personal digital assistant, PDA), a tablet computer, a laptop computer (laptop computer), a personal computer (personal computer, PC), an in-vehicle terminal, or the like. This is not specifically limited herein.

The following describes in detail a neural network training method, a prediction network training method, and a speech processing method in the embodiments of this application with reference to the accompanying drawings.

A neural network and a prediction network in the embodiments of this application may be two separate networks, or may be a multi-task neural network. One task is to output duration, and the other task is to output a speech feature.

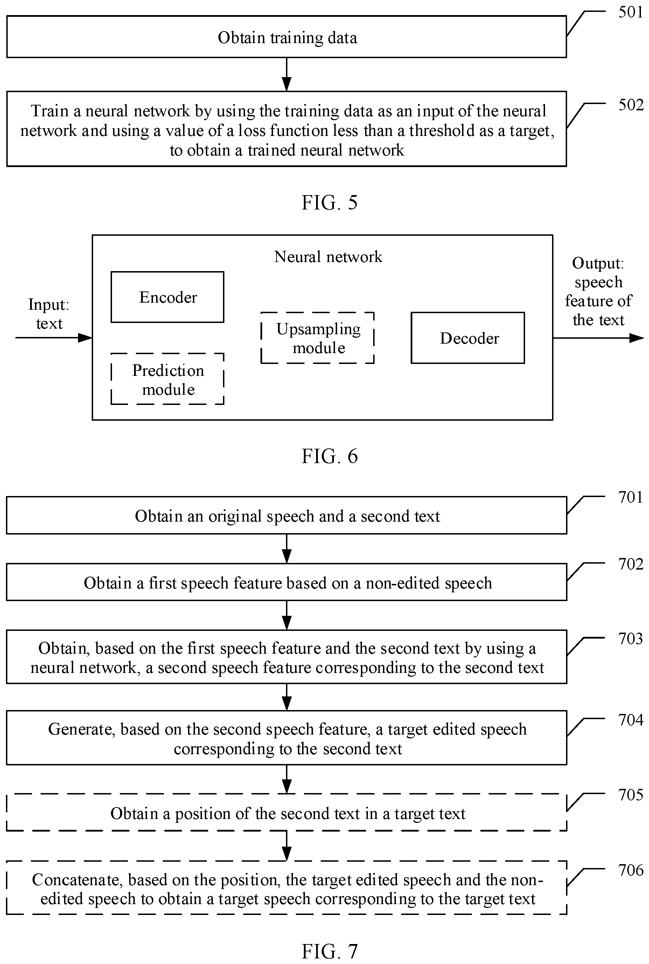

Then, with reference to FIG. 5, the neural network training method in the embodiments of this application is described in detail. The training method shown in FIG. 5 may be performed by a neural network training apparatus. The neural network training apparatus may be a cloud service device, or may be a terminal device, for example, an apparatus having a computing capability sufficient to perform the neural network training method, such as a computer or a server, or may be a system including a cloud service device and a terminal device. For example, the training method may be performed by the training device 120 in FIG. 1 or the neural network processing unit 40 in FIG. 4.

Optionally, the training method may be processed by a CPU, or may be processed by both a CPU and a GPU; or no GPU may be used, but another processor suitable for neural network computation is used. This is not limited in this application.

The training method shown in FIG. 5 includes step 501 and step 502. The following describes step 501 and step 502 in detail.

First, a process of training a prediction network is briefly described. The prediction network in this embodiment of this application may be an RNN, a CNN, or the like. This is not specifically limited herein. In a training phase of the prediction network, an input is a vector of a training text, and an output is duration of each phoneme in the training text. Then a difference between duration of each phoneme in the training text output by the prediction network and actual duration of a training speech corresponding to the training text is continuously reduced, so that a trained prediction network is obtained.

Step 501: Obtain training data.

The training data in this embodiment of this application includes a training speech, or includes a training speech and a training text corresponding to the training speech. If the training data does not include the training text, the training text may be obtained through training speech recognition.

Optionally, if there are a plurality of speakers (or users), to ensure that a subsequently predicted speech feature is correct, a training speech feature in the training data may further include a user identity, or include a voiceprint feature of the training speech, or include a vector used to identify a voiceprint feature of the training speech.

Optionally, the training data may further include start-end duration information of each phoneme in the training speech.

In this embodiment of this application, the training data may be obtained by directly recording a sound made by a sound-making object, or may be obtained by inputting audio information and video information by a user, or may be obtained by receiving data sent by a collection device. In an actual application, the training data may be obtained in another manner. A manner of obtaining the training data is not specifically limited herein.

Step 502: Train the neural network by using the training data as an input of the neural network and using a value of a loss function less than a second threshold as a target, to obtain a trained neural network.

Optionally, some preprocessing may be performed on the training data. For example, if the training data includes the training speech described above, the training text may be obtained through training speech recognition, and the training text is expressed by using phonemes and input into the neural network.

In a training process, the entire training text may be used as a target edited text and used as an input, and the neural network is trained with reduction of the value of the loss function as a target, that is, a difference between a speech feature output by the neural network and an actual speech feature corresponding to the training speech is continuously reduced. The training process may be understood as a prediction task. The loss function may be understood as a loss function corresponding to the prediction task.

The neural network in this embodiment of this application may be specifically an attention mechanism model, for example, a transformer or tacotron2. The attention mechanism model includes an encoder-decoder, and a structure of the encoder or the decoder may be a recurrent neural network, a long short-term memory (long short-term memory, LSTM) network, or the like.

The neural network in this embodiment of this application includes an encoder (encoder) and a decoder (decoder). Structure types of the encoder and the decoder may be an RNN, an LSTM, and the like. This is not specifically limited herein. The encoder encodes the training text into a text vector (represented by a vector in units of phonemes, and each input corresponds to one vector). The decoder obtains, based on the text vector, a speech feature corresponding to the text. In the training process, the decoder performs calculation in each step by using a real speech feature corresponding to the previous step as a condition.

Further, to ensure speech coherence, speech duration corresponding to the text vector may be corrected by using a prediction network. In other words, it may be understood that upsampling is performed on the text vector based on duration of each phoneme in the training speech (or it may be understood that a quantity of frames in the vector is extended), to obtain a vector corresponding to the quantity of frames. A function of the decoder is to obtain, based on the vector corresponding to the quantity of frames, the speech feature corresponding to the text.

Optionally, the decoder may be a unidirectional decoder, or may be a bidirectional decoder (that is, parallel in two directions). This is not specifically limited herein. The two directions refer to directions of the training text, or may be understood as directions of the vector corresponding to the training text, or may be understood as a forward order and a reverse order of the training text. One direction is from one side of the training text to the other side of the training text, and the other direction is from the other side of the training text to the one side of the training text.

For example, if the training text is "zhong wu chi fan le mei (Have you had lunch yet)", the first direction or the forward order may be a direction from "zhong" to "mei", and the second direction or the reverse order may be a direction from "mei" to "zhong".

If the decoder is a bidirectional decoder, decoders in the two directions (or the forward order and the reverse order) perform training in parallel and perform calculation separately in the training process without depending on results of each other. Certainly, if the prediction network and the neural network are a multi-task network, the prediction network may be referred to as a prediction module, and the decoder may correct, based on real duration information corresponding to the training text, the speech feature output by the neural network.

For an architecture of the neural network in this embodiment of this application, refer to FIG. 6. The neural network includes the encoder and the decoder. Optionally, the neural network may further include a prediction module and an upsampling module. The prediction module is specifically configured to implement a function of the prediction network, and the upsampling module is specifically configured to implement a process of upsampling the text vector based on duration of each phoneme in the training speech. Details are not described herein again.

It should be noted that, in the training process, another training method may be used instead of the foregoing training method. This is not limited herein.

The following describes in detail a speech processing method in an embodiment of this application with reference to the accompanying drawings.

First, the speech processing method provided in this embodiment of this application may be applied to a replacement scenario, an insertion scenario, or a deletion scenario. The foregoing scenario may be understood as replacing, inserting, or deleting an original speech corresponding to an original text to obtain a target speech, so that auditory perception of the target speech is similar to auditory perception of the original speech and/or that smoothness of the target speech is improved. It may be considered that the original speech includes a to-be-modified speech, and that the target speech is a speech that a user wants to obtain after correcting the original speech.

For ease of understanding, the following describes several examples of the foregoing scenarios.

1. For the replacement scenario

The original text is "jin tian Shenzhen tian qi hen hao (The weather in Shenzhen is very fine today)", and the target text is "jin tian Guangzhou tian qi hen hao (The weather in Guangzhou is very fine today)". An overlapping text is "jin tian tian qi hen hao (The weather is very fine today)". A non-overlapping text in the original text is "Shenzhen", and a non-overlapping text in the target text is "Guangzhou". The target text includes a first text and a second text. The first text is the overlapping text or a part of the overlapping text. The second text is a text other than the first text in the target text. For example, if the first text is "jin tian tian qi hen hao", the second text is "Guangzhou". If the first text is "jin qi hen hao", the second text is "tian Guangzhou tian".

2. For the insertion scenario

The original text is "jin tian Shenzhen tian qi hen hao (The weather in Shenzhen is very fine today)", and the target text is "jin tian shang wu Shenzhen tian qi hen hao (The weather in Shenzhen is very fine this morning)". An overlapping text is "jin tian Shenzhen tian qi hen hao (The weather in Shenzhen is very fine today)". A non-overlapping text in the target text is "shang wu (morning)". To implement coherence of the target speech, the insertion scenario may be considered as a replacement scenario in which "tian shen" in the original speech is replaced with "tian shang wu shen". To be specific, a first text is "jin zhen tian qi hen hao", and the second text is "tian shang wu shen".

3. For the deletion scenario

The original text is "jin tian Shenzhen tian qi hen hao (The weather in Shenzhen is very fine today)", and the target text is "jin tian tian qi hen hao (The weather is very fine today)". An overlapping text is "jin tian tian qi hen hao (The weather is very fine today)". A non-overlapping text in the original text is "Shenzhen". To implement coherence of the target speech, the deletion scenario may be considered as a replacement scenario in which "tian Shenzhen tian" in the original speech is replaced with "tian tian". To be specific, a first text is "jin qi hen hao", and a second text is "tian tian".

Optionally, the foregoing several scenarios are merely examples. In an actual application, there are other scenarios. This is not specifically limited herein.

Because both the deletion scenario and the insertion scenario may be replaced with the replacement scenario, the following uses only the replacement scenario as an example to describe a speech processing method provided in an embodiment of this application. The speech processing method provided in this embodiment of this application may be performed by a terminal device or a cloud device separately, or may be performed by a terminal device and a cloud device together. The following separately provides descriptions.

Embodiment 1: A terminal device or a cloud device performs the speech processing method separately.

FIG. 7 shows an embodiment of a speech processing method provided in an embodiment of this application. The method may be performed by a speech processing device, or may be performed by a component (for example, a processor, a chip, or a chip system) of a speech processing device. The speech processing device may be a terminal device or a cloud device. This embodiment includes step 701 to step 706.

Step 701: Obtain an original speech and a second text.

In this embodiment of this application, the speech processing device may directly obtain the original speech, an original text, and the second text. Alternatively, the original speech and the second text may be obtained first, and then the original speech is recognized, and an original text corresponding to the original speech is obtained. The second text is a text other than a first text in a target text. The original text and the target text include the first text. The first text may be understood as a part or an entirety of an overlapping text between the original text and the target text.

In this embodiment of this application, the speech processing device obtains the second text in a plurality of manners, which are separately described below.

In a first manner, the speech processing device may directly obtain the second text based on an input of another device or a user.

In a second manner, the speech processing device obtains the target text, obtains the overlapping text based on the target text and the original text corresponding to the original speech, and then determines the second text based on the overlapping text. Specifically, characters in the original text and the target text may be compared one by one, or may be input into a comparison model, so that the overlapping text and/or a non-overlapping text between the original text and the target text can be determined. Then the first text is determined based on the overlapping text. The first text may be the overlapping text, or may be a part of the overlapping text.

In this embodiment of this application, the first text is determined based on the overlapping text in a plurality of manners. The speech processing device may directly determine the overlapping text as the first text, or may determine the first text in the overlapping text according to a preset rule, or may determine the first text in the overlapping text based on an operation of the user. The preset rule may be that the first text is obtained after N characters in overlapping content are removed, where N is a positive integer.

It may be understood that the foregoing two manners are merely examples. In an actual application, there is another manner of obtaining the second text. This is not specifically limited herein.

In addition, the speech processing device may align the original text with the original speech, determine start and end positions of each phoneme in the original text in the original speech, and may learn duration of each phoneme in the original text. Further, a phoneme corresponding to the first text is obtained, that is, a speech (that is, a non-edited speech) corresponding to the first text in the original speech is obtained.

Optionally, a manner in which the speech processing device may align the original text with the original speech may be a forced alignment method, for example, an alignment tool such as a Montreal forced aligner (Montreal forced aligner, MFA) or a neural network having an alignment function. This is not specifically limited herein.

Optionally, after obtaining the original speech and the original text, the speech processing device may display a user interface to the user, where the user interface includes the original speech and the original text. Further, the user performs a first operation on the original text by using the user interface, and the speech processing device determines the target text in response to the first operation of the user. The first operation may be understood as editing of the original text by the user, and the editing may be specifically the foregoing replacement, insertion, deletion, or the like.

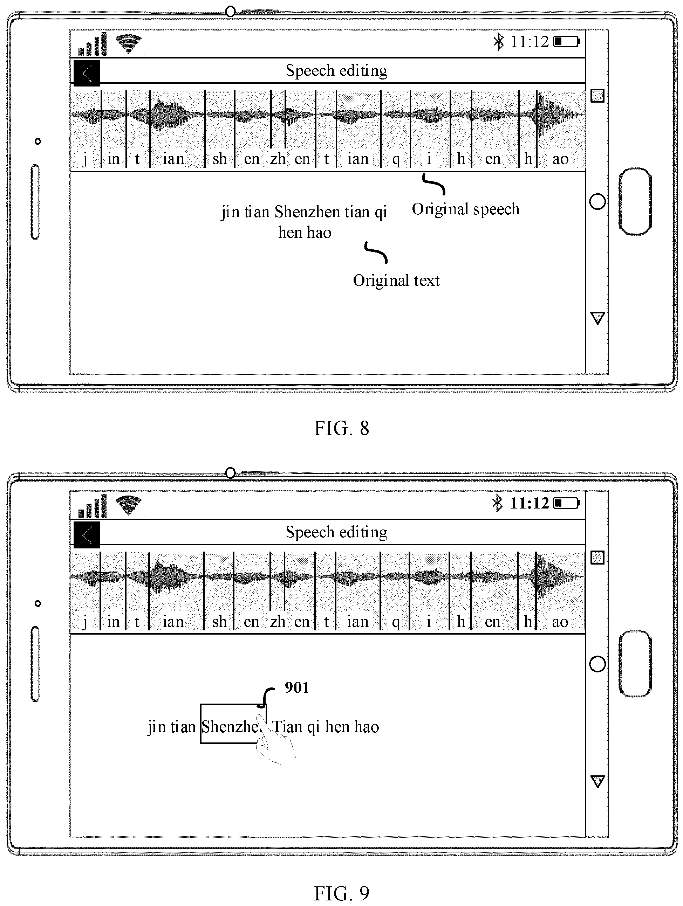

For example, the examples in the foregoing replacement scenario are still used. The original text is "jin tian Shenzhen tian qi hen hao (The weather in Shenzhen is very fine today)", and the target text is "jin tian Guangzhou tian qi hen hao (The weather in Guangzhou is very fine today)". For example, an example in which the speech processing device is a mobile phone is used for description. After obtaining the original text and the original speech, the speech processing device displays an interface shown in FIG. 8 to the user. The interface includes the original text and the original speech. As shown in FIG. 9, the user may perform a first operation 901 on the original text, for example, changing "Shenzhen" to "Guangzhou" and the foregoing insertion, deletion, and replacement operations. Herein, only replacement is used as an example for description.

Optionally, after determining the overlapping text between the original text and the target text, the speech processing device displays the overlapping text to the user, then determines the first text from the overlapping text based on a second operation of the user, and further determines the second text. The second operation may be an operation such as tapping, dragging, or sliding. This is not specifically limited herein.

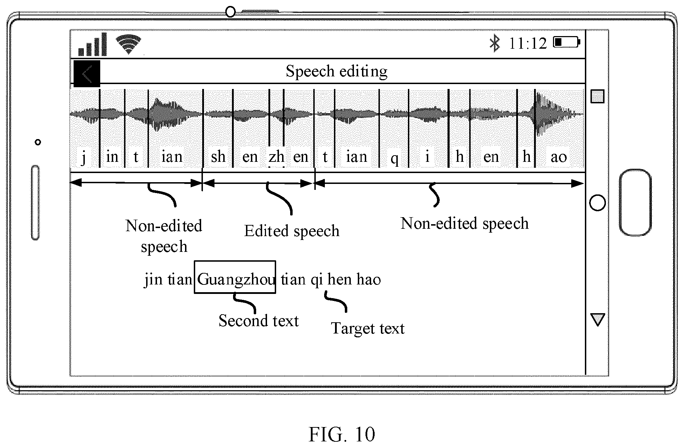

For example, the foregoing example is still used. The second text is "Guangzhou", the first text is "jin tian tian qi hen hao (The weather is very fine today)", and the non-edited speech is a speech of the first text in the original speech. Assuming that one character corresponds to two frames and that the original speech corresponding to the original text includes 16 frames, the non-edited speech is equivalent to the first frame to the fourth frame and the ninth frame to the sixteenth frame in the original speech. It may be understood that, in an actual application, a correspondence between a character and a speech frame is not necessarily 1:2 in the foregoing example. The foregoing example is merely for ease of understanding of a non-editing area, and a quantity of frames corresponding to the original text is not specifically limited herein. After the target text is determined, the speech processing device may display an interface shown in FIG. 10. The interface may include the second text, the target text, the non-edited speech in the original speech, and an edited speech. The second text is "Guangzhou", the target text is "jin tian Guangzhou tian qi hen hao (The weather in Guangzhou is very fine today)", the non-edited speech is a speech corresponding to "jin tian tian qi hen hao (The weather is very fine today)", and the edited speech is a speech corresponding to "Shenzhen". It may also be understood that, as the user edits the target text, the speech processing device determines the non-edited speech in the original speech based on the target text, the original text, and the original speech.

Optionally, the speech processing device receives an editing request sent by the user, where the editing request includes the original speech and the second text. Optionally, the editing request further includes the original text and/or a speaker identity. Certainly, the editing request may also include the original speech and the target text.

Step 702: Obtain a first speech feature based on the non-edited speech.

The speech feature in this embodiment of this application may be used to indicate a feature (for example, a timbre, a rhythm, an emotion, or a cadence) of the speech. The speech feature may be represented in a plurality of forms, for example, a speech frame, a sequence, or a vector. This is not specifically limited herein. In addition, the speech feature in this embodiment of this application may be specifically a parameter extracted from the foregoing representation form by using the foregoing method such as PLP, LPC, or MFCC.

Optionally, at least one speech frame is selected from the non-edited speech as the first speech feature. Further, in order that the first speech feature of the context is more referenced by a second speech feature, a text corresponding to the at least one speech frame may be a text that is in the first text and that is adjacent to the second text.

Optionally, the non-edited speech is encoded by using an encoding model, so that a target sequence is obtained, and the target sequence is used as the first speech feature. The encoding model may be a CNN, an RNN, or the like. This is not specifically limited herein.

In addition, the first speech feature may further carry a voiceprint feature of the original speech. A manner of obtaining the voiceprint feature may be directly obtaining the voiceprint feature, or may be obtaining the voiceprint feature by recognizing the original speech, or the like. On one hand, the voiceprint feature of the original speech is introduced, so that the subsequently generated second speech feature also carries the voiceprint feature of the original speech, thereby improving a similarity between a target edited speech and the original speech. On the other hand, when there are a plurality of speakers (or users), introducing the voiceprint feature can improve a similarity between a subsequently predicted speech feature and a voiceprint of a speaker of the original speech.

Optionally, the speech processing device may further obtain a speaker identity of the original speech, so that when there are a plurality of speakers, a speech corresponding to a corresponding speaker can be matched, thereby improving a similarity between the subsequent target edited speech and the original speech.

In the following description, it is assumed that a speech frame is used as a speech feature (or it may be understood that a speech feature is obtained based on a speech frame). For example, the foregoing example is still used. At least one of the first frame to the fourth frame and the ninth frame to the sixteenth frame in the original speech is selected as the first speech feature.

For example, the first speech feature is a Mel spectral feature.

Step 703: Obtain, based on the first speech feature and the second text by using the neural network, the second speech feature corresponding to the second text.

After obtaining the first speech feature, the speech processing device may obtain, based on the first speech feature and the second text by using the neural network, the second speech feature corresponding to the second text. The neural network includes an encoder and a decoder. The second text is input into the encoder, so that a first vector corresponding to the second text is obtained, and then the decoder decodes the first vector based on the first speech feature to obtain the second speech feature. The first speech feature may be the same as or similar to the second speech feature in terms of a rhythm, a timbre, and/or a signal-to-noise ratio, and the like. The rhythm may reflect an emotional state, a speech form, or the like of the speaker. The rhythm generally refers to a feature such as an intonation, a tone, a stress or an emphasis, a pause, or a cadence.

Optionally, an attention mechanism may be introduced between the encoder and the decoder to adjust a correspondence between quantities of inputs and outputs.

Optionally, in an encoding process of the encoder, the target text in which the second text is located may be introduced, so that the generated first vector of the second text refers to the target text, and that the second text described by the first vector is more accurate. In other words, the second speech feature corresponding to the second text may be obtained based on the first speech feature, the target text, and annotation information by using the neural network. Specifically, the target text and the annotation information may be input into the encoder, so that the first vector corresponding to the second text is obtained, and then the decoder decodes the first vector based on the first speech feature to obtain the second speech feature. The annotation information annotates the second text in the target text.

In addition, to ensure that duration of the target edited speech corresponding to the second text is consistent with a speaking speed of the non-edited speech, duration of the target edited speech may be corrected. In a possible implementation, a specific step of correction may include: predicting total duration by using a prediction network, where the total duration is total duration of all phonemes corresponding to the target text; and splitting the total duration into first duration and second duration, where the first duration is phoneme duration corresponding to the first text in the target text, and the second duration is phoneme duration corresponding to the second text in the target text. Then the second duration is corrected based on the first duration and third duration, so that first corrected duration is obtained, where the third duration is phoneme duration of the first text in the original speech. In another possible implementation, a specific step of correction may include: predicting fourth duration based on the second text by using a prediction network, where the fourth duration is total duration of all phonemes corresponding to the second text; obtaining a speaking speed of the original speech; correcting the fourth duration based on the speaking speed to obtain second corrected duration; and obtaining the second speech feature based on the first vector, the first speech feature, and the second corrected duration by using the decoder. For a similar operation, refer to the description in the foregoing possible implementation. Details are not described herein again.

It may also be understood that the phoneme duration of the second text in the target text is corrected based on a difference between the phoneme duration of the first text in the original speech and the phoneme duration that is of the first text in the target text and that is predicted by the prediction network.

Optionally, a difference coefficient is calculated by using the following formula 1:

$$\text{formula 1:} \quad S = \frac{\sum_{k=1}^{n} \frac{RP_k}{LP_k}}{n},$$

where n is a quantity of phonemes of the first text, $RP_k$ is duration (that is, the third duration) of a $K^{th}$ phoneme in the original speech, and $LP_k$ is predicted duration (that is, the first duration) corresponding to the $K^{th}$ phoneme in the second text. In this case, First corrected duration = s * Second duration.

Optionally, after the decoder obtains the first vector, upsampling may be performed on the first vector by using the corrected duration (the first corrected duration or the second corrected duration), to obtain a second vector, and the decoder decodes the second vector based on the first speech feature to obtain the second speech feature. The upsampling herein may be understood as extending or prolonging the second duration corresponding to the first vector, to the corrected duration corresponding to the second vector. In addition, the decoder may alternatively obtain the second speech feature in an autoregressive manner, that is, the decoder adjusts the second speech feature while generating the second speech feature.

The decoder in this embodiment of this application may be a unidirectional decoder, or may be a bidirectional decoder. The following provides separate descriptions.

1. The decoder is a unidirectional decoder.

The decoder calculates the first vector or the second vector from a first direction of the target text based on the first speech feature to obtain a speech frame, and uses the speech frame as the second speech feature. The first direction is a direction from one side of the target text to the other side of the target text. In addition, the first direction may be understood as a forward order or a reverse order of the target text (for related descriptions, refer to the descriptions about the forward order and the reverse order in the embodiment shown in FIG. 5).

Optionally, the first speech feature and the first vector are input into the decoder, so that the second speech feature is obtained. Alternatively, the first speech feature and the second vector are input into the decoder, so that the second speech feature is obtained.

2. If the second text is in a middle area of the target text, the decoder may be a bidirectional decoder (it may also be understood that the decoder includes a first decoder and a second decoder).

"The second text is in a middle area of the target text" may be understood as "the second text is not at two ends of the target text".

The bidirectional decoder in this embodiment of this application has a plurality of cases, which are separately described below.

1. A third speech feature output by the bidirectional decoder from the first direction is a speech feature corresponding to the second text, and a fourth speech feature output by the bidirectional decoder from a second direction is a speech feature corresponding to the second text.

In this case, it may be understood that complete speech features corresponding to the two second texts may be separately obtained based on left and right sides (that is, the forward order and the reverse order), and the second speech feature is obtained based on the two speech features.

The first decoder calculates the first vector or the second vector from the first direction of the target text based on the first speech feature, to obtain the third speech feature (hereinafter referred to as LR) of the second text. The second decoder calculates the first vector or the second vector from the second direction of the target text based on the first speech feature, to obtain the fourth speech feature (hereinafter referred to as RL) of the second text, and generates the second speech feature based on the third speech feature and the fourth speech feature. The first direction is a direction from one side of the target text to the other side of the target text, and the second direction is opposite to the first direction (or the second direction is understood as a direction from the other side of the target text to the one side of the target text). The first direction may be the foregoing forward order, and the second direction may be the foregoing reverse order.

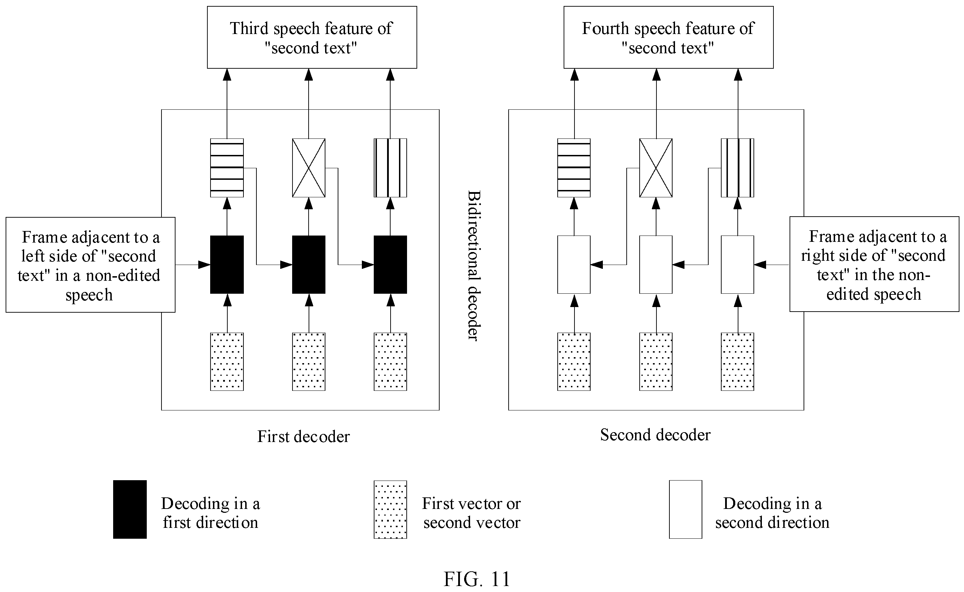

For the bidirectional decoder, when decoding the first frame of the first vector or the second vector in the first direction, the first encoder may decode a speech frame adjacent to one side (which may also be referred to as the left side) of the second text in the non-edited speech as a condition to obtain N-frame LR. When decoding the first frame of the first vector or the second vector in the second direction, the second encoder may decode a speech frame adjacent to the other side (which may also be referred to as the right side) of the second text in the non-edited speech as a condition to obtain N-frame RL. Optionally, for a structure of the bidirectional decoder, refer to FIG. 11. After N-frame LR and N-frame RL are obtained, a frame whose difference in LR and RL is less than a threshold may be used as a transitional frame (a position is m, where m is less than n,), or a frame whose difference in LR and RL is smallest may be used as a transitional frame. In this case, the N frames of the second speech feature may include first m frames in LR and last n-m frames in RL, or the N frames of the second speech feature include first n-m frames in LR and last m frames in RL. A difference in LR and RL may be understood as a distance between vectors. In addition, if the speaker identity is obtained in step 701, the first vector or the second vector in this step may further include a third vector used to identify the speaker. It may also be understood that the third vector is used to identify the voiceprint feature of the original speech.

For example, the foregoing example is still used. It is assumed that LR frames corresponding to "Guangzhou" and obtained by the first encoder include $LR_1$, $LR_2$, $LR_3$, and $LR_4$. RL frames corresponding to "Guangzhou" and obtained by the second encoder include $RL_1$, $RL_2$, $RL_3$, and $RL_4$. In addition, a difference between $LR_2$ and $RL_2$ is the smallest. In this case, $LR_1$, $LR_2$, $RL_3$, and $RL_4$, or $LR_1$, $RL_2$, $RL_3$, and $RL_4$ are used as the second speech feature.

2. A third speech feature output by the bidirectional decoder from the first direction is a speech feature corresponding to a third text in the second text, and a fourth speech feature output by the bidirectional decoder from the second direction is a speech feature corresponding to a fourth text in the second text.

In this case, it may be understood that one part of speech features corresponding to the second text may be obtained based on left and right sides (that is, the forward order and the reverse order), and the complete second speech feature is obtained based on the two parts of speech features. To be specific, one part of speech features are taken from the forward order direction, the other part of speech features are taken from the reverse order direction, and the one part of speech features and the other part of speech features are concatenated, so that the entire speech feature is obtained.

For example, the foregoing example is still used. It is assumed that LR frames corresponding to the third text ("Guang") and obtained by the first encoder include $LR_1$ and $LR_2$. RL frames corresponding to the fourth text ("zhou") and obtained by the second encoder include $RL_3$ and $RL_4$. In this case, $LR_1$, $LR_2$, $RL_3$, and $RL_4$ are concatenated, so that the second speech feature is obtained.

It may be understood that the foregoing two manners are merely examples. In an actual application, there is another manner of obtaining the second speech feature. This is not specifically limited herein.

Step 704: Generate, based on the second speech feature, the target edited speech corresponding to the second text.

After obtaining the second speech feature, the speech processing device may convert, based on a vocoder, the second speech feature into the target edited speech corresponding to the second text. The vocoder may be a conventional vocoder (for example, a Griffin-lim algorithm), or may be a neural network vocoder (for example, Melgan or Hifigan pre-trained by using audio training data). This is not specifically limited herein.

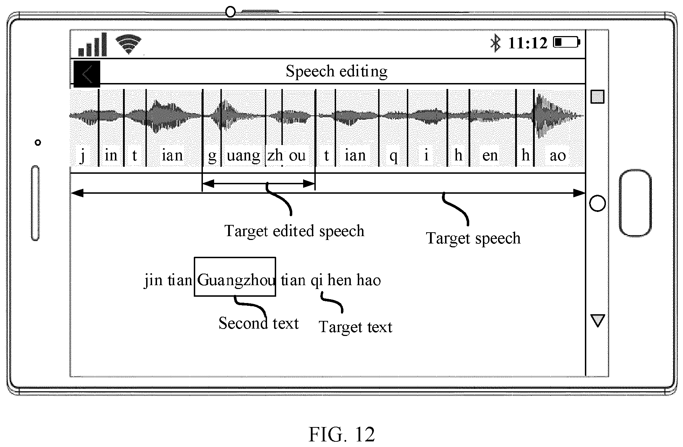

For example, the foregoing example is still used, and a target edited speech corresponding to "Guangzhou" is shown in FIG. 12.

Step 705: Obtain a position of the second text in the target text. This step is optional.

Optionally, if the original speech and the second text are obtained in step 701, the position of the second text in the target text is obtained.

Optionally, if the target text is obtained in step 701, the start and end positions of each phoneme in the original text in the original speech may be determined by aligning the original speech with the original text by using an alignment technology in step 701. In addition, the position of the second text in the target text is determined based on the start and end positions of each phoneme.

Step 706: Concatenate, based on the position, the target edited speech and the non-edited speech to generate a target speech corresponding to the target text. This step is optional.

The position in this embodiment of this application is used to concatenate the non-edited speech and the target edited speech. The position may be the position of the second text in the target text, or may be a position of the first text in the target text, or may be a position of the non-edited speech in the original speech, or may be a position of the edited speech in the original speech.

Optionally, after the position of the second text in the target text is obtained, the start and end positions of each phoneme in the original text in the original speech may be determined by aligning the original speech with the original text by using the alignment technology in step 701. In addition, the position of the non-edited speech or the edited speech in the original speech is determined based on the position of the first text in the original text. Then the speech processing device concatenates the target edited speech and the non-edited speech based on the position, to obtain the target speech. In other words, the target speech is obtained by replacing an editing area in the original speech with the target speech corresponding to the second text.

For example, the foregoing example is still used. The non-edited speech is equivalent to the first frame to the fourth frame and the ninth frame to the sixteenth frame in the original speech. The target edited speech is $LR_1$, $LR_2$, $RL_3$, and $RL_4$, or $LR_1$, $RL_2$, $RL_3$, and $RL_4$. The concatenating the target edited speech and the non-edited speech may be understood as replacing the fifth frame to the eighth frame in the original speech with the obtained four frames, to obtain the target speech, that is, replacing the speech corresponding to " Shenzhen" in the original speech with the speech corresponding to "Guangzhou", to obtain the target text: a target speech corresponding to " jin tian Guangzhou tian qi hen hao (The weather in Guangzhou is very fine today)". The target speech corresponding to "jin tian Guangzhou tian qi hen hao (The weather in Guangzhou is very fine today)" is shown in FIG. 12.

Optionally, after obtaining the target edited speech or the target speech, the speech processing device plays the target edited speech or the target speech.

In a possible implementation, the speech processing method provided in this embodiment of this application includes step 701 to step 704. In another possible implementation, the speech processing method provided in this embodiment of this application includes step 701 to step 705. In another possible implementation, the speech processing method provided in this embodiment of this application includes step 701 to step 706. In addition, in this embodiment of this application, a time sequence relationship between the steps shown in FIG. 7 is not limited. For example, step 705 in the foregoing method may be performed after step 704, or may be performed before step 701, or may be performed with step 701.

In this embodiment of this application, on one hand, the second speech feature corresponding to the second text in the target text is obtained by using the first speech feature of the first text in the original speech, that is, the second speech feature of the second text in the target text is generated by referring to the first speech feature of the first text in the original text. Therefore, auditory perception of the target edited speech or the target speech (that is, the edited speech) is similar to auditory perception of the original speech, and user experience is improved. On the other hand, the duration of the target edited speech is corrected, so that a speaking speed of the target speech is similar to that of the original speech, thereby improving user experience. In addition, the original speech may be modified by directly modifying the original text. Therefore, operability of speech editing by the user is improved, and after being edited, the target edited speech is highly similar to the original speech in dimensions of a timbre, a rhythm, and the like. In addition, when the target speech is generated, the non-edited speech is not modified, and the second speech feature of the target edited speech is similar to the first speech feature of the non-edited speech. Therefore, when the user listens to the original speech and the target speech, it is difficult to perceive a difference between the original speech and the target speech in terms of speech features.

The foregoing describes the speech processing method implemented by the terminal device or the cloud device separately. The following describes a speech processing method performed by the terminal device and the cloud device together.

Embodiment 2: A terminal device and a cloud device jointly perform a speech processing method.

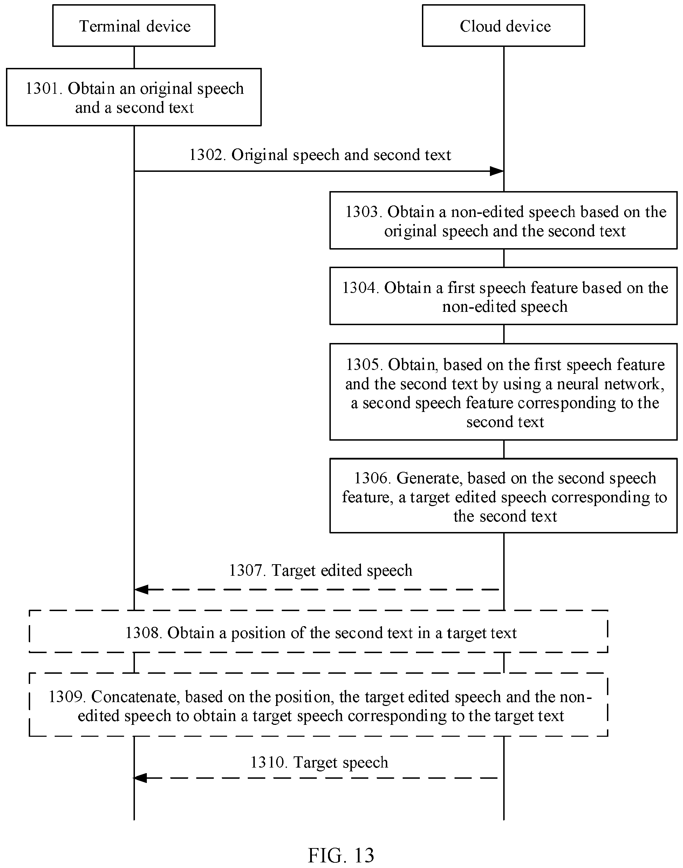

FIG. 13 shows an embodiment of a speech processing method provided in an embodiment of this application. The method may be performed by a terminal device and a cloud device together, or may be performed by a component (for example, a processor, a chip, or a chip system) of a terminal device and a component (for example, a processor, a chip, or a chip system) of a cloud device. This embodiment includes step 1301 to step 1306.

Step 1301: The terminal device obtains an original speech and a second text.

Step 1301 performed by the terminal device in this embodiment is similar to step 701 performed by the speech processing device in the embodiment shown in FIG. 7, and details are not described herein again.

Step 1302: The terminal device sends the original speech and the second text to the cloud device.

After obtaining the original speech and the second text, the terminal device may send the original speech and the second text to the cloud device.

Optionally, if the terminal device obtains the original speech and a target text in step 1301, the terminal device sends the original speech and the target text to the cloud device.

Step 1303: The cloud device obtains a non-edited speech based on the original speech and the second text.

In this embodiment, step 1303 performed by the cloud device is similar to the determining of the non-edited speech in step 701 performed by the speech processing device in the embodiment shown in FIG. 7, and details are not described herein again.

Step 1304: The cloud device obtains a first speech feature based on the non-edited speech.

Step 1305: The cloud device obtains, based on the first speech feature and the second text by using a neural network, a second speech feature corresponding to the second text.

Step 1306: The cloud device generates, based on the second speech feature, a target edited speech corresponding to the second text.

Step 1304 to step 1306 performed by the cloud device in this embodiment are similar to step 702 to step 704 performed by the speech processing device in the embodiment shown in FIG. 7, and details are not described herein again.

Step 1307: The cloud device sends the target edited speech to the terminal device. This step is optional.

Optionally, after obtaining the target edited speech, the cloud device may send the target edited speech to the terminal device.

Step 1308: The terminal device or the cloud device obtains a position of the second text in the target text. This step is optional.

Step 1309: The terminal device or the cloud device concatenates, based on the position, the target edited speech and the non-edited speech, to generate a target speech corresponding to the target text. This step is optional.

Step 1308 and step 1309 in this embodiment are similar to step 705 and step 706 performed by the speech processing device in the embodiment shown in FIG. 7, and details are not described herein again. Step 1308 and step 1309 in this embodiment may be performed by the terminal device or the cloud device.

Step 1310: The cloud device sends the target speech to the terminal device. This step is optional.

Optionally, if step 1308 and step 1309 are performed by the cloud device, after obtaining the target speech, the cloud device sends the target speech to the terminal device. If step 1308 and step 1309 are performed by the terminal device, this step may not be performed.

Optionally, after obtaining the target edited speech or the target speech, the terminal device plays the target edited speech or the target speech.

In a possible implementation, the speech processing method provided in this embodiment of this application may include: the cloud device generates the target edited speech, and sends the target edited speech to the terminal device. In other words, the method includes step 1301 to step 1307. In another possible implementation, the speech processing method provided in this embodiment of this application may include: the cloud device generates the target edited speech, generates the target speech based on the target edited speech and the non-edited speech, and sends the target speech to the terminal device. In other words, the method includes step 1301 to step 1306 and step 1308 to step 1310. In another possible implementation, the speech processing method provided in this embodiment of this application may include: the cloud device generates the target edited speech, and sends the target edited speech to the terminal device; and the terminal device generates the target speech based on the target edited speech and the non-edited speech. In other words, the method includes step 1301 to step 1309.

In this embodiment of this application, on one hand, through interaction between the cloud device and the terminal device, the cloud device may perform complex computation to obtain the target edited speech or the target speech, and return the target edited speech or the target speech to the terminal device, so that computing power and storage space of the terminal device can be reduced. On the other hand, the target edited speech corresponding to a modified text may be generated based on a speech feature of a non-editing area in the original speech, and then the target speech corresponding to the target text is generated based on the non-edited speech. In addition, a user may modify the text in the original text to obtain the target edited speech corresponding to the modified text (that is, the second text). Therefore, user experience in text-based speech editing is improved. In addition, when the target speech is generated, the non-edited speech is not modified, and the second speech feature of the target edited speech is similar to the first speech feature of the non-edited speech. Therefore, when the user listens to the original speech and the target speech, it is difficult to perceive a difference between the original speech and the target speech in terms of speech features.

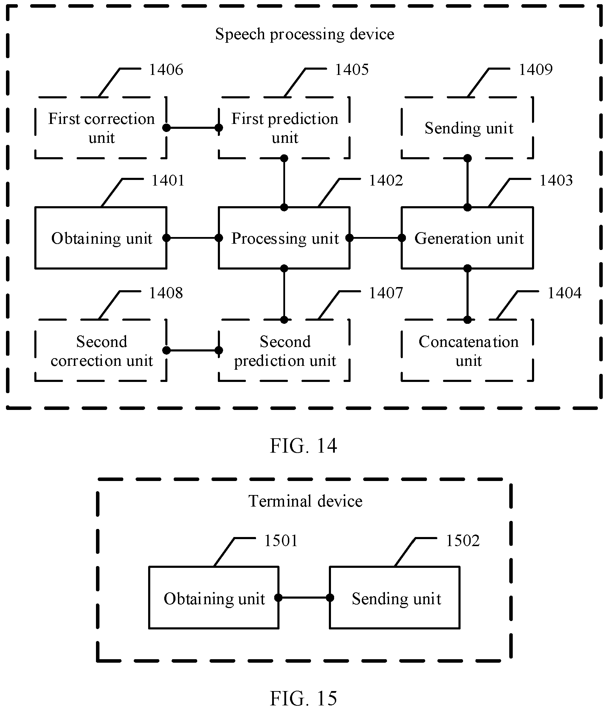

The foregoing describes the speech processing method in the embodiments of this application. The following describes a speech processing device in the embodiments of this application. Referring to FIG. 14, an embodiment of a speech processing device in an embodiment of this application includes:

an obtaining unit 1401, configured to obtain an original speech and a second text, where the second text is a text other than a first text in a target text, both the target text and an original text corresponding to the original speech include the first text, and a speech that is in the original speech and that is corresponding to the first text is a non-edited speech, where

the obtaining unit 1401 is further configured to obtain a first speech feature based on the non-edited speech;

a processing unit 1402, configured to obtain, based on the first speech feature and the second text by using a neural network, a second speech feature corresponding to the second text; and

a generation unit 1403, configured to generate, based on the second speech feature, a target edited speech corresponding to the second text.

Optionally, the speech processing device in this embodiment further includes:

a concatenation unit 1404, configured to concatenate, based on the position, the target edited speech and the non-edited speech to obtain a target speech corresponding to the target text;

a first prediction unit 1405, configured to predict first duration and second duration based on the target text by using a prediction network, where the first duration is phoneme duration corresponding to the first text in the target text, and the second duration is phoneme duration corresponding to the second text in the target text;

a first correction unit 1406, configured to correct the second duration based on the first duration and third duration, to obtain first corrected duration, where the third duration is phoneme duration of the first text in the original speech;

a second prediction unit 1407, configured to predict fourth duration based on the second text by using a prediction network, where the fourth duration is total duration of all phonemes corresponding to the second text; and

a second correction unit 1408, configured to correct the fourth duration based on a speaking speed to obtain second corrected duration.

When the speech processing device is a cloud device, the cloud device may further include a sending unit 1409, configured to send the target edited speech or the target speech to a terminal device.

In this embodiment, operations performed by the units in the speech processing device are similar to those described in the embodiments shown in FIG. 7 to FIG. 12. Details are not described herein again.

In this embodiment, on one hand, the processing unit 1402 obtains, by using the first speech feature of the first text in the original speech, the second speech feature corresponding to the second text in the target text, that is, the processing unit 1402 generates the second speech feature of the second text in the target text by referring to the first speech feature of the first text in the original text. Therefore, auditory perception of the target edited speech generated by the generation unit 1403 or the target speech is similar to auditory perception of the original speech, and user experience is improved. On the other hand, the first correction unit 1406 or the second correction unit 1408 corrects duration of the target edited speech, so that a speaking speed of the target speech is similar to that of the original speech, thereby improving user experience. In addition, the original speech may be modified by directly modifying the original text. Therefore, operability of speech editing by a user is improved, and after being edited, the target edited speech is highly similar to the original speech in dimensions of a timbre, a rhythm, and the like. In addition, when the target speech is generated, the non-edited speech is not modified, and the second speech feature of the target edited speech is similar to the first speech feature of the non-edited speech. Therefore, when the user listens to the original speech and the target speech, it is difficult to perceive a difference between the original speech and the target speech in terms of speech features.

FIG. 15 shows another embodiment of a speech processing device in an embodiment of this application. The speech processing device may be a terminal device. The terminal device includes:

an obtaining unit 1501, configured to obtain an original speech and a second text, where the second text is a text other than a first text in a target text, both the target text and an original text corresponding to the original speech include the first text, and a speech that is in the original speech and that is corresponding to the first text is a non-edited speech; and

a sending unit 1502, configured to send the original speech and the second text to a cloud device, where the original speech and the second text are used by the cloud device to generate a target edited speech corresponding to the second text, where

the obtaining unit 1501 is further configured to receive the target edited speech sent by the cloud device.

In this embodiment, operations performed by the units in the speech processing device are similar to the foregoing steps performed by the terminal device in the embodiment shown in FIG. 13. Details are not described herein again.

In this embodiment, on one hand, through interaction between the cloud device and the terminal device, the cloud device may perform complex computation to obtain the target edited speech or a target speech, and return the target edited speech or the target speech to the terminal device, so that computing power and storage space of the terminal device can be reduced. On the other hand, a user may modify the text in the original text to obtain the target edited speech corresponding to the modified text (that is, the second text). Therefore, user experience in text-based speech editing is improved.

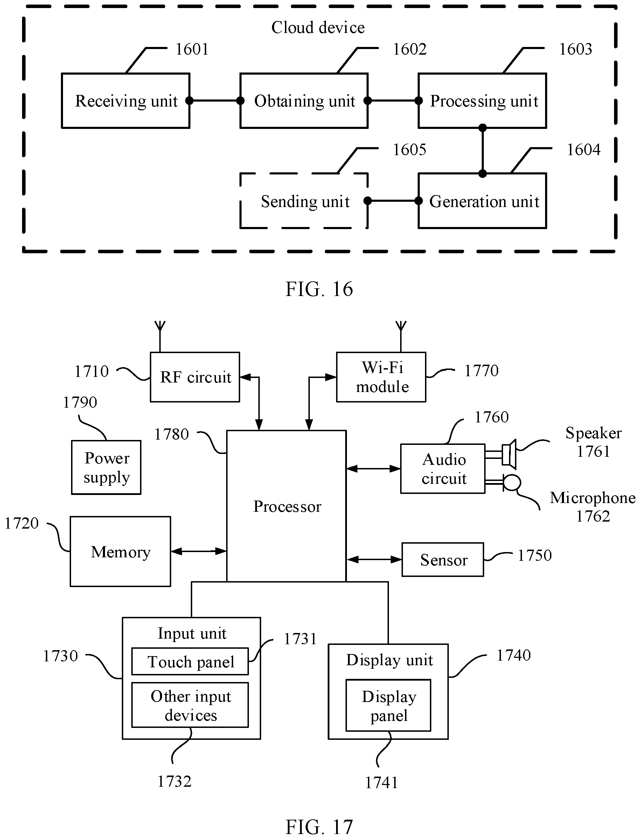

FIG. 16 shows another embodiment of a speech processing device in an embodiment of this application. The speech processing device may be a cloud device. The cloud device includes:

a receiving unit 1601, configured to receive an original speech and a second text that are sent by a terminal device, where the second text is a text other than a first text in a target text, both the target text and an original text corresponding to the original speech include the first text, and a speech that is in the original speech and that is corresponding to the first text is a non-edited speech;

an obtaining unit 1602, configured to obtain a first speech feature based on the non-edited speech;

a processing unit 1603, configured to obtain, based on the first speech feature and the second text by using a neural network, a second speech feature corresponding to the second text; and

a generation unit 1604, configured to generate, based on the second speech feature, a target edited speech corresponding to the second text.

Optionally, the generation unit 1604 is further configured to generate a target speech based on the target edited speech and the non-edited speech.

Optionally, the speech processing device in this embodiment further includes:

a sending unit 1605, configured to send the target edited speech or the target speech to the terminal device.

In this embodiment, operations performed by the units in the speech processing device are similar to the foregoing steps performed by the cloud device in the embodiment shown in FIG. 13. Details are not described herein again.

In this embodiment, on one hand, through interaction between the cloud device and the terminal device, the cloud device may perform complex computation to obtain the target edited speech or a target speech, and return the target edited speech or the target speech to the terminal device, so that computing power and storage space of the terminal device can be reduced. On the other hand, a user may modify the text in the original text to obtain the target edited speech corresponding to the modified text (that is, the second text). Therefore, user experience in text-based speech editing is improved. In addition, when the generation unit 1604 generates the target speech, the non-edited speech is not modified, and the second speech feature of the target edited speech is similar to the first speech feature of the non-edited speech. Therefore, when the user listens to the original speech and the target speech, it is difficult to perceive a difference between the original speech and the target speech in terms of speech features.

Referring to FIG. 17, an embodiment of this application provides another speech processing device. For ease of description, only a part related to this embodiment of this application is shown. For specific technical details that are not disclosed, refer to the method part in the embodiments of this application. The speech processing device may be any terminal device including a mobile phone, a tablet computer, a personal digital assistant (personal digital assistant, PDA), a sales terminal device (point of sales, POS), a vehicle-mounted computer, or the like. For example, the speech processing device is a mobile phone.

FIG. 17 is a block diagram of a partial structure of a mobile phone related to a speech processing device according to an embodiment of this application. Referring to FIG. 17, the mobile phone includes components such as a radio frequency (Radio Frequency, RF) circuit 1710, a memory 1720, an input unit 1730, a display unit 1740, a sensor 1750, an audio circuit 1760, a Wireless Fidelity (Wireless Fidelity, Wi-Fi) module 1770, a processor 1780, and a power supply 1790. A person skilled in the art may understand that the structure of the mobile phone shown in FIG. 17 does not constitute any limitation on the mobile phone. The mobile phone may include more or fewer components than those shown in the figure, or some components are combined, or component arrangements are different.

The following describes in detail each component of the mobile phone with reference to FIG. 17.

The RF circuit 1710 may be configured to receive and send signals in an information receiving and sending process or a call process. Particularly, after receiving downlink information from a base station, the RF circuit 1710 sends the downlink information to the processor 1780 for processing. In addition, the RF circuit 1710 sends designed uplink data to the base station. Generally, the RF circuit 1710 includes but is not limited to an antenna, at least one amplifier, a transceiver, a coupler, a low noise amplifier (low noise amplifier, LNA), a duplexer, and the like. In addition, the RF circuit 1710 may further communicate with a network and another device through wireless communication. The foregoing wireless communication may use any communications standard or protocol, including but not limited to a global system for mobile communications (global system of mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short messaging service, SMS), and the like.

The memory 1720 may be configured to store a software program and module. The processor 1780 runs the software program and module stored in the memory 1720, to perform various functional applications and data processing of the mobile phone. The memory 1720 may primarily include a program storage area and a data storage area. The program storage area may store an operating system, an application (such as an audio play function and an image play function) required by at least one function, and the like. The data storage area may store data (such as audio data and a phone book) created based on use of the mobile phone. In addition, the memory 1720 may include a high-speed random access memory, and may further include a non-volatile memory such as at least one disk storage device, a flash memory device, or another volatile solid-state storage device.

The input unit 1730 may be configured to receive input digit or character information, and generate a key signal input related to a user setting and function control of the mobile phone. Specifically, the input unit 1730 may include a touch panel 1731 and other input devices 1732. The touch panel 1731, also referred to as a touchscreen, may collect a touch operation performed by a user on or near the touch panel 1731 (for example, an operation performed by the user on or near the touch panel 1731 by using any suitable object or accessory such as a finger or a stylus); and drive a corresponding connection apparatus based on a preset program. Optionally, the touch panel 1731 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into touch point coordinates, and sends the touch point coordinates to the processor 1780; and can receive and execute a command sent by the processor 1780. In addition, the touch panel 1731 may be implemented in a plurality of types, such as a resistive type, a capacitive type, an infrared type, and a surface acoustic wave type. In addition to the touch panel 1731, the input unit 1730 may further include the other input devices 1732. Specifically, the other input devices 1732 may include but are not limited to one or more of a physical keyboard, a functional button (such as a volume control button or a power button), a trackball, a mouse, a joystick, and the like.

The display unit 1740 may be configured to display information entered by the user or information provided for the user, and various menus of the mobile phone. The display unit 1740 may include a display panel 1741. Optionally, the display panel 1741 may be configured in a form of a liquid crystal display (liquid crystal display, LCD), an organic light-emitting diode (organic light-emitting diode, OLED), or the like. Further, the touch panel 1731 may cover the display panel 1741. After detecting the touch operation on or near the touch panel 1731, the touch panel 1731 transmits the touch operation to the processor 1780 to determine a type of a touch event. Then the processor 1780 provides a corresponding visual output on the display panel 1741 based on the type of the touch event. Although the touch panel 1731 and the display panel 1741 are used as two separate parts in FIG. 17 to implement input and input functions of the mobile phone, in some embodiments, the touch panel 1731 and the display panel 1741 may be integrated to implement the input and output functions of the mobile phone.

The mobile phone may further include at least one sensor 1750 such as an optical sensor, a motion sensor, and other sensors. Specifically, the optical sensor may include an ambient light sensor and a proximity sensor. The ambient light sensor may adjust luminance of the display panel 1741 based on brightness of ambient light. The proximity sensor may turn off the display panel 1741 and/or backlight when the mobile phone is moved to an ear. As a type of motion sensor, an accelerometer sensor can detect magnitudes of accelerations in all directions (usually on three axes). The accelerometer sensor can detect a magnitude and a direction of gravity when the mobile phone is stationary, and can be applied to posture recognition (such as screen switching between portrait and landscape, related games, and magnetometer posture calibration) of the mobile phone, functions related to vibration recognition (such as a pedometer and tapping), and the like. Other sensors such as a gyroscope, a barometer, a hygrometer, a thermometer, and an infrared sensor may also be configured in the mobile phone. Details are not described herein.

The audio circuit 1760, a speaker 1761, and a microphone 1762 may provide an audio interface between the user and the mobile phone. The audio circuit 1760 may convert received audio data into an electrical signal and transmit the electrical signal to the speaker 1761. The speaker 1761 converts the electrical signal into a sound signal for outputting. In addition, the microphone 1762 converts a collected sound signal into an electrical signal. The audio circuit 1760 receives the electrical signal, converts the electrical signal into audio data, and outputs the audio data to the processor 1780 for processing. Then the processor 1780 sends the audio data to, for example, another mobile phone by using the RF circuit 1710, or outputs the audio data to the memory 1720 for further processing.

Wi-Fi is a short-range wireless transmission technology. The mobile phone may help, by using the Wi-Fi module 1770, the user receive and send e-mails, browse web pages, access streaming media, and so on, and provides wireless broadband Internet access for the user. Although FIG. 17 shows the Wi-Fi module 1770, it may be understood that the Wi-Fi module 1770 is not a mandatory component of the mobile phone.

The processor 1780 is a control center of the mobile phone, and is connected to various parts of the mobile phone by using various interfaces and lines. By running or executing the software program and/or module stored in the memory 1720, and invoking data stored in the memory 1720, the processor 1780 performs various functions and data processing of the mobile phone, thereby performing overall monitoring on the mobile phone. Optionally, the processor 1780 may include one or more processing units. Preferably, an application processor and a modem processor may be integrated into the processor 1780. The application processor mainly processes an operating system, a user interface, an application program, and the like. The modem processor mainly processes wireless communication. It may be understood that the modem processor may alternatively not be integrated into the processor 1780.

The mobile phone further includes the power supply 1790 (such as a battery) for supplying power to the components. Preferably, the power supply may be logically connected to the processor 1780 by using a power management system, thereby implementing functions such as charging management, discharging management, and power consumption management by using the power management system.

Although not shown, the mobile phone may further include a camera, a Bluetooth module, and the like. Details are not described herein.

In this embodiment of this application, the processor 1780 included in the terminal device may perform a function of the speech processing device in the embodiment in FIG. 7, or perform a function of the terminal device in the embodiment shown in FIG. 13. Details are not described again herein.

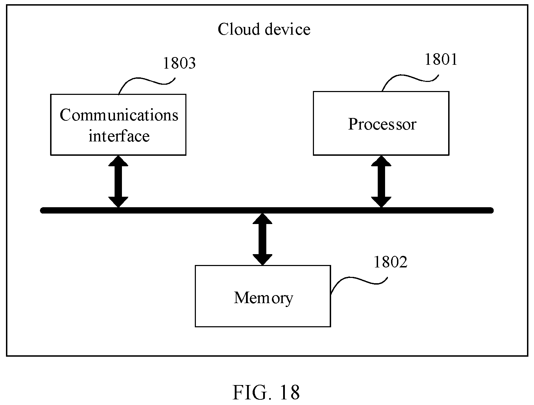

FIG. 18 is a schematic diagram of a structure of another speech processing device according to this application. The speech processing device may be a cloud device. The cloud device may include a processor 1801, a memory 1802, and a communications interface 1803. The processor 1801, the memory 1802, and the communications interface 1803 are interconnected by a line. The memory 1802 stores program instructions and data.

The memory 1802 stores program instructions and data that correspond to the steps performed by the speech processing device in the implementation corresponding to FIG. 7. Alternatively, the memory 1802 stores program instructions and data that correspond to the steps performed by the cloud device in the implementation corresponding to FIG. 13.

The processor 1801 is configured to perform the steps that are performed by the speech processing device and that are shown in any one of the embodiments shown in FIG. 7. Alternatively, the processor 1801 is configured to perform the steps that are performed by the cloud device and that are shown in any one of the embodiments shown in FIG. 13.

The communications interface 1803 may be configured to receive and send data, and is configured to perform steps related to obtaining, sending, and receiving in any one of the embodiments shown in FIG. 7 or FIG. 13.

In an implementation, the cloud device may include more or fewer components than those shown in FIG. 18. This is merely an example for description and does not constitute any limitation in this application.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, each of the units may exist alone physically, or two or more units are integrated into one unit. All or some of the foregoing integrated units may be implemented by using software, hardware, firmware, or any combination thereof.

When software is used to implement the integrated units, all or some of the embodiments may be implemented in a form of a computer program product. The computer program product includes one or more computer instructions. When the computer program instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or may be a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have", and any other variant thereof are intended to cover a non-exclusive inclusion, so that a process, method, system, product, or device that includes a series of units is not necessarily limited to those units, but may include another unit not clearly listed or inherent to such a process, method, system, product, or device.

**Claims**

1. A speech processing method, wherein the method comprises:

   obtaining an original speech and a second text, wherein the second text is a text other than a first text in a target text, both the target text and an original text corresponding to the original speech comprise the first text, and a speech that is in the original speech and that is corresponding to the first text is a non-edited speech;
   obtaining a first speech feature based on the non-edited speech;
   obtaining, based on the first speech feature and the second text by using a neural network, a second speech feature corresponding to the second text; and
   generating, based on the second speech feature, a target edited speech corresponding to the second text.

2. The method according to claim 1, wherein the method further comprises:

   obtaining a position of the second text in the target text; and
   concatenating, based on the position, the target edited speech and the non-edited speech to obtain a target speech corresponding to the target text.

3. The method according to claim 1 or 2, wherein the obtaining a first speech feature based on the non-edited speech comprises:

   obtaining at least one speech frame in the non-edited speech; and
   obtaining the first speech feature based on the at least one speech frame, wherein the first speech feature represents a feature of the at least one speech frame, and the first speech feature is a feature vector or a sequence.

4. The method according to claim 3, wherein a text corresponding to the at least one speech frame is a text that is in the first text and that is adjacent to the second text.

5. The method according to any one of claims 1 to 4, wherein the obtaining, based on the first speech feature and the second text by using a neural network, a second speech feature corresponding to the second text comprises:
   obtaining, based on the first speech feature, the target text, and annotation information by using the neural network, the second speech feature corresponding to the second text, wherein the annotation information annotates the second text in the target text.

6. The method according to any one of claims 1 to 5, wherein the neural network comprises an encoder and a decoder, and the obtaining, based on the first speech feature and the second text by using a neural network, a second speech feature corresponding to the second text comprises:

   obtaining, based on the second text by using the encoder, a first vector corresponding to the second text; and
   obtaining the second speech feature based on the first vector and the first speech feature by using the decoder.

7. The method according to claim 6, wherein the obtaining, based on the second text by using the encoder, a first vector corresponding to the second text comprises:
   obtaining the first vector based on the target text by using the encoder.

8. The method according to claim 6 or 7, wherein the method further comprises:

   predicting first duration and second duration based on the target text by using a prediction network, wherein the first duration is phoneme duration corresponding to the first text in the target text, and the second duration is phoneme duration corresponding to the second text in the target text; and
   correcting the second duration based on the first duration and third duration, to obtain first corrected duration, wherein the third duration is phoneme duration of the first text in the original speech; and
   the obtaining the second speech feature based on the first vector and the first speech feature by using the decoder comprises:
   obtaining the second speech feature based on the first vector, the first speech feature, and the first corrected duration by using the decoder.

**9.** The method according to claim 6 or 7, wherein the method further comprises:

predicting fourth duration based on the second text by using a prediction network, wherein the fourth duration is total duration of all phonemes corresponding to the second text;
obtaining a speaking speed of the original speech; and
correcting the fourth duration based on the speaking speed to obtain second corrected duration; and
the obtaining the second speech feature based on the first vector and the first speech feature by using the decoder comprises:
obtaining the second speech feature based on the first vector, the first speech feature, and the second corrected duration by using the decoder.

**10.** The method according to any one of claims 6 to 9, wherein the obtaining the second speech feature based on the first vector and the first speech feature by using the decoder comprises:
decoding, based on the decoder and the first speech feature, the first vector from the target text in a forward order or a reverse order to obtain the second speech feature.

**11.** The method according to any one of claims 6 to 9, wherein the second text is in a middle area of the target text, and the obtaining the second speech feature based on the first vector and the first speech feature by using the decoder comprises:

decoding, based on the decoder and the first speech feature, the first vector from the target text in a forward order to obtain a third speech feature;
decoding, based on the decoder and the first speech feature, the first vector from the target text in a reverse order to obtain a fourth speech feature; and
obtaining the second speech feature based on the third speech feature and the fourth speech feature.

**12.** The method according to claim 11, wherein the second text comprises a third text and a fourth text, the third speech feature is a speech feature corresponding to the third text, and the fourth speech feature is a speech feature corresponding to the fourth text; and
the obtaining the second speech feature based on the third speech feature and the fourth speech feature comprises:
concatenating the third speech feature and the fourth speech feature to obtain the second speech feature.

**13.** The method according to claim 11, wherein the third speech feature is a speech feature that is corresponding to the second text and that is obtained by the decoder based on the forward order, and the fourth speech feature is a speech feature that is corresponding to the second text and that is obtained by the decoder based on the reverse order; and
the obtaining the second speech feature based on the third speech feature and the fourth speech feature comprises:

determining, in the third speech feature and the fourth speech feature, a speech feature whose similarity is greater than a first threshold as a transitional speech feature; and
concatenating a fifth speech feature and a sixth speech feature to obtain the second speech feature, wherein the fifth speech feature is captured from the third speech feature based on a position of the transitional speech feature in the third speech feature, and the sixth speech feature is captured from the fourth speech feature based on a position of the transitional speech feature in the fourth speech feature.

**14.** A speech processing device, comprising a processor, wherein the processor is coupled to a memory, the memory is configured to store a program or instructions, and when the program or instructions are executed by the processor, the speech processing device is enabled to perform the method according to any one of claims 1 to 13.

**15.** A computer-readable storage medium, wherein the computer-readable storage medium stores instructions, and when the instructions are executed on a computer, the computer is enabled to perform the method according to any one of claims 1 to 13.

**Patentansprüche**

**1.** Sprachverarbeitungsverfahren, wobei das Verfahren Folgendes umfasst:

Erlangen einer Originalsprache und eines zweiten Textes, wobei der zweite Text ein anderer Text als ein erster Text in einem Zieltext ist, sowohl der Zieltext als auch ein Originaltext, der der Originalsprache entspricht, den ersten Text umfassen und eine Sprache, die in der Originalsprache enthalten ist und die dem ersten Text entspricht, eine unbearbeitete Sprache ist;

Erlangen eines ersten Sprachmerkmals basierend auf der unbearbeiteten Sprache;

Erlangen eines zweiten Sprachmerkmals, das dem zweiten Text entspricht, basierend auf dem ersten Sprachmerkmal und dem zweiten Text unter Verwendung eines neuronalen Netzes; und

Erzeugen einer bearbeiteten Zielsprache, die dem zweiten Text entspricht, basierend auf dem zweiten Sprachmerkmal.

2. Verfahren nach Anspruch 1, wobei das Verfahren ferner Folgendes umfasst:

Erlangen einer Position des zweiten Textes im Zieltext; und

Verketten der bearbeiteten Zielsprache und der unbearbeiteten Sprache basierend auf der Position, um eine Zielsprache zu erlangen, die dem Zieltext entspricht.

3. Verfahren nach Anspruch 1 oder 2, wobei das Erlangen eines ersten Sprachmerkmals basierend auf der unbearbeiteten Sprache Folgendes umfasst:

Erlangen mindestens eines Sprach-Frames in der unbearbeiteten Sprache; und

Erlangen des ersten Sprachmerkmals basierend auf dem mindestens einen Sprach-Frame, wobei das erste Sprachmerkmal ein Merkmal des mindestens einen Sprach-Frames darstellt und das erste Sprachmerkmal ein Merkmalsvektor oder eine Sequenz ist.

4. Verfahren nach Anspruch 3, wobei ein Text, der dem mindestens einen Sprach-Frame entspricht, ein Text ist, der in dem ersten Text enthalten ist und der an den zweiten Text angrenzt.

5. Verfahren nach einem der Ansprüche 1 bis 4, wobei das Erlangen eines zweiten Sprachmerkmals, das dem zweiten Text entspricht, basierend auf dem ersten Sprachmerkmal und dem zweiten Text unter Verwendung eines neuronalen Netzes Folgendes umfasst:

Erlangen des zweiten Sprachmerkmals, das dem zweiten Text entspricht, basierend auf dem ersten Sprachmerkmal, dem Zieltext und Annotationsinformationen unter Verwendung des neuronalen Netzes, wobei die Annotationsinformationen den zweiten Text in dem Zieltext annotieren.

6. Verfahren nach einem der Ansprüche 1 bis 5, wobei das neuronale Netz einen Codierer und einen Decodierer umfasst und das Erlangen eines zweiten Sprachmerkmals, das dem zweiten Text entspricht, basierend auf dem ersten Sprachmerkmal und dem zweiten Text unter Verwendung eines neuronalen Netzes Folgendes umfasst:

Erlangen eines ersten Vektors, der dem zweiten Text entspricht, basierend auf dem zweiten Text unter Verwendung des Codierers;

und

Erlangen des zweiten Sprachmerkmals basierend auf dem ersten Vektor und dem ersten Sprachmerkmal unter Verwendung des Decodierers.

7. Verfahren nach Anspruch 6, wobei das Erlangen eines ersten Vektors, der dem zweiten Text entspricht, basierend auf dem zweiten Text unter Verwendung des Codierers Folgendes umfasst:

Erlangen des ersten Vektors basierend auf dem Zieltext unter Verwendung des Codierers.

8. Verfahren nach Anspruch 6 oder 7, wobei das Verfahren ferner Folgendes umfasst:

Vorhersagen einer ersten Dauer und einer zweiten Dauer basierend auf dem Zieltext unter Verwendung eines Vorhersagenetzwerks, wobei die erste Dauer eine Phonemdauer ist, die dem ersten Text in dem Zieltext entspricht, und die zweite Dauer eine Phonemdauer ist, die dem zweiten Text in dem Zieltext entspricht; und

Korrigieren der zweiten Dauer basierend auf der ersten Dauer und der dritten Dauer, um eine erste korrigierte Dauer zu erlangen, wobei die dritte Dauer eine Phonemdauer des ersten Textes in der ursprünglichen Sprache ist; und

wobei das Erlangen des zweiten Sprachmerkmals basierend auf dem ersten Vektor und dem ersten Sprachmerkmal unter Verwendung des Decodierers Folgendes umfasst:

Erlangen des zweiten Sprachmerkmals basierend auf dem ersten Vektor, dem ersten Sprachmerkmal und der ersten korrigierten Dauer unter Verwendung des Decodierers.

9. Verfahren nach Anspruch 6 oder 7, wobei das Verfahren ferner Folgendes umfasst:

Vorhersagen der vierten Dauer basierend auf dem zweiten Text unter Verwendung eines Vorhersagenetzwerks, wobei die vierte Dauer die Gesamtdauer aller Phoneme ist, die dem zweiten Text entsprechen;
Erlangen einer Sprechgeschwindigkeit der Originalsprache; und
Korrigieren der vierten Dauer basierend auf der Sprechgeschwindigkeit, um eine zweite korrigierte Dauer zu erlangen; und

wobei das Erlangen des zweiten Sprachmerkmals basierend auf dem ersten Vektor und dem ersten Sprachmerkmal unter Verwendung des Decodierers Folgendes umfasst:
Erlangen des zweiten Sprachmerkmals basierend auf dem ersten Vektor, dem ersten Sprachmerkmal und der zweiten korrigierten Dauer unter Verwendung des Decodierers.

10. Verfahren nach einem der Ansprüche 6 bis 9, wobei das Erlangen des zweiten Sprachmerkmals basierend auf dem ersten Vektor und dem ersten Sprachmerkmal unter Verwendung des Decodierers Folgendes umfasst:
Decodieren des ersten Vektors aus dem Zieltext in einer Vorwärtsreihenfolge oder einer Rückwärtsreihenfolge, um das zweite Sprachmerkmal zu erlangen, basierend auf dem Decodierer und dem ersten Sprachmerkmal.

11. Verfahren nach einem der Ansprüche 6 bis 9, wobei der zweite Text in einem mittleren Bereich des Zieltextes liegt und das Erlangen des zweiten Sprachmerkmals basierend auf dem ersten Vektor und dem ersten Sprachmerkmal unter Verwendung des Decodierers Folgendes umfasst:

Decodieren des ersten Vektors aus dem Zieltext in einer Vorwärtsreihenfolge, um ein drittes Sprachmerkmal zu erlangen, basierend auf dem Decodierer und dem ersten Sprachmerkmal;
Decodieren des ersten Vektors aus dem Zieltext in einer Rückwärtsreihenfolge, um ein viertes Sprachmerkmal zu erlangen, basierend auf dem Decodierer und dem ersten Sprachmerkmal; und
Erlangen des zweiten Sprachmerkmals basierend auf dem dritten Sprachmerkmal und dem vierten Sprachmerkmal.

12. Verfahren nach Anspruch 11, wobei der zweite Text einen dritten Text und einen vierten Text umfasst, das dritte Sprachmerkmal ein Sprachmerkmal ist, das dem dritten Text entspricht, und das vierte Sprachmerkmal ein Sprachmerkmal ist, das dem vierten Text entspricht; und
das Erlangen des zweiten Sprachmerkmals basierend auf dem dritten Sprachmerkmal und dem vierten Sprachmerkmal Folgendes umfasst:
Verketten des dritten Sprachmerkmals und des vierten Sprachmerkmals, um das zweite Sprachmerkmal zu erlangen.

13. Verfahren nach Anspruch 11, wobei das dritte Sprachmerkmal ein Sprachmerkmal ist, das dem zweiten Text entspricht und das durch den Decodierer basierend auf der Vorwärtsreihenfolge erlangt wird, und das vierte Sprachmerkmal ein Sprachmerkmal ist, das dem zweiten Text entspricht und das durch den Decodierer basierend auf der Rückwärtsreihenfolge erlangt wird; und
das Erlangen des zweiten Sprachmerkmals basierend auf dem dritten Sprachmerkmal und dem vierten Sprachmerkmal Folgendes umfasst:

Bestimmen eines Sprachmerkmals in dem dritten Sprachmerkmal und dem vierten Sprachmerkmal, dessen Ähnlichkeit größer als ein erster Schwellenwert ist, als ein Übergangssprachmerkmal; und
Verketten eines fünften Sprachmerkmals und eines sechsten Sprachmerkmals, um das zweite Sprachmerkmal zu erlangen, wobei das fünfte Sprachmerkmal aus dem dritten Sprachmerkmal basierend auf einer Position des Übergangssprachmerkmals in dem dritten Sprachmerkmal erfasst wird und das sechste Sprachmerkmal aus dem vierten Sprachmerkmal basierend auf einer Position des Übergangssprachmerkmals in dem vierten Sprachmerkmal erfasst wird.

14. Sprachverarbeitungsvorrichtung, umfassend einen Prozessor, wobei der Prozessor mit einem Speicher gekoppelt ist, der Speicher dazu konfiguriert ist, ein Programm oder Anweisungen zu speichern, und wenn das Programm oder die Anweisungen von dem Prozessor ausgeführt werden, die Sprachverarbeitungsvorrichtung in die Lage versetzt wird, das Verfahren nach einem der Ansprüche 1 bis 13 durchzuführen.

15. Computerlesbares Speichermedium, wobei das computerlesbare Speichermedium Anweisungen speichert, und wenn die Anweisungen auf einem Computer ausgeführt werden, der Computer in die Lage versetzt wird, das Verfahren nach einem der Ansprüche 1 bis 13 durchzuführen.

**Revendications**

1. Procédé de traitement de parole, dans lequel le procédé comprend :

    l'obtention d'une parole originale et d'un deuxième texte, dans lequel le deuxième texte est un texte autre qu'un premier texte dans un texte cible, le texte cible et un texte original correspondant à la parole originale comprennent le premier texte, et une parole qui est dans la parole originale et qui correspond au premier texte est une parole non éditée ;
    l'obtention d'une première caractéristique de parole sur la base de la parole non éditée ;
    l'obtention, sur la base de la première caractéristique de parole et du deuxième texte à l'aide d'un réseau neuronal, d'une deuxième caractéristique de parole correspondant au deuxième texte ; et
    la génération, sur la base de la deuxième caractéristique de parole, d'une parole éditée cible correspondant au deuxième texte.

2. Procédé selon la revendication 1, dans lequel le procédé comprend également :

    l'obtention d'une position du deuxième texte dans le texte cible ; et
    la concaténation, sur la base de la position, de la parole cible éditée et de la parole non éditée pour obtenir une parole cible correspondant au texte cible.

3. Procédé selon la revendication 1 ou 2, dans lequel l'obtention d'une première caractéristique de parole sur la base de la parole non éditée comprend :

    l'obtention d'au moins une trame de parole dans la parole non éditée ; et
    l'obtention de la première caractéristique de parole sur la base de l'au moins une trame de parole, dans lequel la première caractéristique de parole représente une caractéristique de l'au moins une trame de parole, et la première caractéristique de parole est un vecteur de caractéristique ou une séquence.

4. Procédé selon la revendication 3, dans lequel un texte correspondant à l'au moins une trame de parole est un texte qui se trouve dans le premier texte et qui est adjacent au deuxième texte.

5. Procédé selon l'une quelconque des revendications 1 à 4, dans lequel l'obtention, sur la base de la première caractéristique de parole et du deuxième texte, à l'aide d'un réseau neuronal, d'une deuxième caractéristique de parole correspondant au deuxième texte comprend :
    l'obtention, sur la base de la première caractéristique de parole, du texte cible et des informations d'annotation à l'aide du réseau neuronal, la deuxième caractéristique de parole correspondant au deuxième texte, dans lequel les informations d'annotation annotent le deuxième texte dans le texte cible.

6. Procédé selon l'une quelconque des revendications 1 à 5, dans lequel le réseau neuronal comprend un encodeur et un décodeur, et l'obtention, sur la base de la première caractéristique de parole et du deuxième texte à l'aide d'un réseau neuronal, d'une deuxième caractéristique de parole correspondant au deuxième texte comprend :

    l'obtention, sur la base du deuxième texte à l'aide de l'encodeur, d'un premier vecteur correspondant au deuxième texte ; et
    l'obtention de la deuxième caractéristique de parole sur la base du premier vecteur et de la première caractéristique de parole à l'aide du décodeur.

7. Procédé selon la revendication 6, dans lequel l'obtention, sur la base du deuxième texte à l'aide de l'encodeur, du premier vecteur correspondant au deuxième texte comprend :
    l'obtention du premier vecteur sur la base du texte cible à l'aide de l'encodeur.

8. Procédé selon la revendication 6 ou 7, dans lequel le procédé comprend également :

    la prédiction de la première durée et de la deuxième durée sur la base du texte cible à l'aide d'un réseau de prédiction, dans lequel la première durée est une durée du phonème correspondant au premier texte dans le texte cible, et la deuxième durée est la durée du phonème correspondant au deuxième texte dans le texte cible ; et la correction de la deuxième durée sur la base de la première et de la troisième durée, pour obtenir la première durée corrigée, dans lequel la troisième durée est la durée du phonème du premier texte dans la parole originale ; et

l'obtention de la deuxième caractéristique de parole sur la base du premier vecteur et de la première caractéristique de parole à l'aide du décodeur comprend :

l'obtention de la deuxième caractéristique de parole sur la base du premier vecteur, de la première caractéristique de parole, et de la première durée corrigée à l'aide du décodeur.

9. Procédé selon la revendication 6 ou 7, dans lequel le procédé comprend également :

la prédiction de la quatrième durée sur la base du deuxième texte à l'aide d'un réseau de prédiction, dans lequel la quatrième durée est la durée totale de tous les phonèmes correspondant au deuxième texte ;
l'obtention d'une vitesse de parole de la parole originale ; et
la correction de la quatrième durée sur la base de la vitesse de parole pour obtenir la seconde durée corrigée ; et
l'obtention de la deuxième caractéristique de parole sur la base du premier vecteur et de la première caractéristique de parole à l'aide du décodeur comprend :
l'obtention de la deuxième caractéristique de parole sur la base du premier vecteur, de la première caractéristique de parole, et de la deuxième durée corrigée à l'aide du décodeur.

10. Procédé selon l'une quelconque des revendications 6 à 9, dans lequel l'obtention de la deuxième caractéristique de parole sur la base du premier vecteur et de la première caractéristique de parole à l'aide du décodeur comprend :
le décodage, sur la base du décodeur et de la première caractéristique de parole, du premier vecteur à partir du texte cible dans un ordre direct ou dans un ordre inverse pour obtenir la deuxième caractéristique de parole.

11. Procédé selon l'une quelconque des revendications 6 à 9, dans lequel le deuxième texte se trouve dans une zone centrale du texte cible, et l'obtention de la deuxième caractéristique de parole sur la base du premier vecteur et de la première caractéristique de parole à l'aide du décodeur comprend :

le décodage, sur la base du décodeur et de la première caractéristique de parole, du premier vecteur à partir du texte cible dans un ordre direct pour obtenir une troisième caractéristique de parole ;
le décodage, sur la base du décodeur et de la première caractéristique de parole, du premier vecteur à partir du texte cible dans un ordre inverse pour obtenir la quatrième caractéristique de parole ; et
l'obtention de la deuxième caractéristique de parole sur la base de la troisième caractéristique de parole et de la quatrième caractéristique de parole.

12. Procédé selon la revendication 11, dans lequel le deuxième texte comprend un troisième texte et un quatrième texte, la troisième caractéristique de parole est une caractéristique de parole correspondant au troisième texte, et la quatrième caractéristique de parole est une caractéristique de parole correspondant au quatrième texte ; et
l'obtention de la deuxième caractéristique de parole sur la base de la troisième caractéristique de parole et de la quatrième caractéristique de parole comprend :
la concaténation de la troisième caractéristique de parole et de la quatrième caractéristique de parole pour obtenir la deuxième caractéristique de parole.

13. Procédé selon la revendication 11, dans lequel la troisième caractéristique de parole est une caractéristique de parole qui correspond au deuxième texte et qui est obtenue par le décodeur sur la base de l'ordre direct, et la quatrième caractéristique de parole est une caractéristique de parole qui correspond au deuxième texte et qui est obtenue par le décodeur sur la base de l'ordre inverse ; et
l'obtention de la deuxième caractéristique de parole sur la base de la troisième caractéristique de parole et de la quatrième caractéristique de parole comprend :

la détermination, dans la troisième caractéristique de parole et la quatrième caractéristique de parole, d'une caractéristique de parole dont la similarité est supérieure à un premier seuil en tant que caractéristique de parole de transition ; et
la concaténation d'une cinquième caractéristique de parole et d'une sixième caractéristique de parole pour obtenir la deuxième caractéristique de parole, dans lequel la cinquième caractéristique de parole est capturée à partir de la troisième caractéristique de parole sur la base d'une position de la caractéristique de parole de transition dans la troisième caractéristique de parole, et la sixième caractéristique de parole est capturée à partir de la quatrième caractéristique de parole sur la base d'une position de la caractéristique de parole de transition dans la quatrième caractéristique de parole.

14. Dispositif de traitement de parole comprenant un processeur, dans lequel le processeur est couplé à une mémoire, et la mémoire est configurée pour stocker un programme ou des instructions ; et lorsque le programme ou les instructions sont exécuté (es) par le processeur, le dispositif de traitement de parole est activé pour réaliser le procédé selon l'une quelconque des revendications 1 à 13.

15. Support de stockage lisible par ordinateur, dans lequel le support de stockage lisible par ordinateur stocke des instructions, et lorsque les instructions sont exécutées sur un ordinateur, l'ordinateur est activé pour réaliser le procédé selon l'une quelconque des revendications 1 à 13.

10

Data collection
device 16

| Data stream

Database
13 → Training device
12

Data
stream

Execution device 11

Client
device
14

Input
data

I/O interface 112

Target model/
rule 101

Calculation module 111

Data
storage
system 15

Output
data

Preprocessing module 113

FIG. 1

Output layer
140

Hidden layer n
13n

Neural network
layer 130

Hidden layer 2
132

Hidden layer 1
131

Convolutional
neural network
(CNN) 100

126

125

124

123

122

121

Convolutional
layer or pooling
layer 120

Input
layer 110

Input layer
110

To-be-processed
image or video

FIG. 2

Output layer
140

Hidden layer n
13n

Neural
network layer
130

Hidden layer 2
132

Hidden layer 1
131

Convolutional
neural network
(CNN) 100

| 126 | 126 | 126 |
| 125 | 125 | 125 |
| 124 | 124 | 124 |
| 123 | 123 | 123 |
| 122 | 122 | 122 |
| 121 | 121 | 121 |

Convolutional
layer or pooling
layer 120

Input
layer 110

Input layer
110

To-be-processed
image or video

FIG. 3

FIG. 4

Obtain training data — 501

Train a neural network by using the training data as an input of the neural network and using a value of a loss function less than a threshold as a target, to obtain a trained neural network — 502

FIG. 5

Neural network

Input: text

Encoder

Upsampling module

Decoder

Prediction module

Output: speech feature of the text

FIG. 6

Obtain an original speech and a second text — 701

Obtain a first speech feature based on a non-edited speech — 702

Obtain, based on the first speech feature and the second text by using a neural network, a second speech feature corresponding to the second text — 703

Generate, based on the second speech feature, a target edited speech corresponding to the second text — 704

Obtain a position of the second text in a target text — 705

Concatenate, based on the position, the target edited speech and the non-edited speech to obtain a target speech corresponding to the target text — 706

FIG. 7

FIG. 8

FIG. 9

FIG. 10

Third speech feature of "second text"

Fourth speech feature of "second text"

Bidirectional decoder

Frame adjacent to a left side of "second text" in a non-edited speech

Frame adjacent to a right side of "second text" in the non-edited speech

First decoder

Second decoder

Decoding in a first direction

First vector or second vector

Decoding in a second direction

FIG. 11

FIG. 12

Terminal device

Cloud device

1301. Obtain an original speech and a second text

1302. Original speech and second text

1303. Obtain a non-edited speech based on the original speech and the second text

1304. Obtain a first speech feature based on the non-edited speech

1305. Obtain, based on the first speech feature and the second text by using a neural network, a second speech feature corresponding to the second text

1306. Generate, based on the second speech feature, a target edited speech corresponding to the second text

1307. Target edited speech

1308. Obtain a position of the second text in a target text

1309. Concatenate, based on the position, the target edited speech and the non-edited speech to obtain a target speech corresponding to the target text

1310. Target speech

FIG. 13

Speech processing device

1406

First correction unit

1405

First prediction unit

1409

Sending unit

1401

Obtaining unit

1402

Processing unit

1403

Generation unit

1408

Second correction unit

1407

Second prediction unit

1404

Concatenation unit

FIG. 14

Terminal device

1501

Obtaining unit

1502

Sending unit

FIG. 15

Cloud device

Receiving unit —1601 —— Obtaining unit —1602 —— Processing unit —1603

Sending unit —1605 —— Generation unit —1604

FIG. 16

1710 — RF circuit

Wi-Fi module — 1770

1790

Power supply

1780 — Processor

1760

Audio circuit

Speaker 1761

Microphone 1762

1720 — Memory

Sensor — 1750

Input unit — 1731

Touch panel

Other input devices

1730

1732

Display unit — 1740

Display panel

1741

FIG. 17

Cloud device

1803

Communications
interface

1801

Processor

1802

Memory

FIG. 18

**EP 4 336 490 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202110621213

**Non-patent literature cited in the description**

• Context-Aware Prosody Correction for Text-Based Speech Editing. **MAX MORRISON et al.** ARXIV.ORG. CORNELL UNIVERSITY LIBRARY, 16 February 2021